# EUROPEAN PATENT APPLICATION

(11) **EP 1 544 772 A1**
(43) Date of publication of application: **22.06.2005**
(21) Application number: 04029453.0
(22) Date of filing: 13.12.2004
(51) Int. Cl.: G06F 17/60

(54) **Content data reproducing apparatus, advertisement information distribution system, advertisement information distribution method, content data reproducing program, and information recording medium**

(30) Priority: 15.12.2003 JP 2003416964
(71) Applicant: Pioneer Corporation, Meguro-ku, Tokyo (JP)
(72) Inventor: Itoh, Naoto Pioneer Corporation, Tsurugashima-shi Saitama-ken (JP)
(74) Representative: Reinhard - Skuhra - Weise & Partner

(57) **Abstract**

A content data reproducing apparatus (MP-k), characterized in that the content data reproducing apparatus is provided with: a reproducing device (108) which reproduces content data recorded on a first recording medium; an identity information acquisition device (104) which acquires medium identity information as identity information about the first recording medium; a reproduction permission information acquisition device (101) which acquires reproduction permission information from either one of a second recording mediumdifferent fromthe first recording medium or an external apparatus based on the acquired medium identity information, the reproduction permission information indicating whether or not a user permits reproduction of advertisement information representing advertisement content during reproduction of the content data; a determination device (106) which determines an ability to reproduce the advertisement information based on at least the reproduction permission information; and an advertisement information acquisition device (102) which externally acquires the advertisement information;

## Description

### BACKGROUND OF THE INVENTION

### 1.Field of the Invention

The present invention relates to a system for recording and reproducing content data, and more particularly to a technique for inserting advertisement information during reproduction of content data.

### 2.Related Art

Media such as DVDs having recorded thereon content data such as movies, or what is called package media, have been commercially available. In addition to the content data, package media of this type have recorded thereon advertisement information representing advertisement content, which is reproduced along with the content data during reproduction of the media.

Since the advertisement information is recorded on a disk at the time of production of the medium, it cannot be replaced after the medium has been produced. In a year or so after the production of the media, advertisement effects expected by the advertiser will be lost. In particular, under the recent economic situation where the media of this type are being rented, a medium may be reproduced one or more years after its production. Then, the advertisement information recorded at the time of production often has no effect at all.

A technique has been proposed for reproducing a package medium with sequentially added advertisement information by adding the advertisement information at certain timings during reproduction of the media (ref.: Japanese Patent Laid-Open No. 2003-87747(Patent Document 1))

However, the invention according to the above patent document 1 involves recording information on a medium in advance for controlling reproduction of the advertisement information, and adding and reproducing the advertisement information based on the control information. Therefore, the invention cannot be implemented without a special medium and a reproduction apparatus for the medium, which will greatly limit practical use of the invention.

Also, in the invention according to the above patent document 1, the frequency of adding the advertisement information is fixed when the package medium is purchased. Therefore, once the package medium has been purchased, the invention does not allow inserting additional advertisement information or disabling reproduction of the advertisement information. This prevents addition and reproduction of the advertisement information that reflects a user's intention.

### SUMMARY OF THE INVENTION

The present invention has been made with respect to the above-described problems. The objects of the present invention is to provide a content data reproduction apparatus, an advertisement information distribution system, an advertisement information distributionmethod, a content data reproduction program, and an information recording medium, in which advertisement information can be added and reproduced during reproduction of a medium while employing a currently available medium such as a DVD, and in which the advertisement information can be added and reproduced during reproduction of the medium while reflecting the user's intention.

The above object of the present invention can be achieved by a content data reproducing apparatus of the present invention. The content data reproducing apparatus is provided with: a reproducing device which reproduces content data recorded on a first recording medium; an identity information acquisition device which acquires medium identity information as identity information about the first recording medium; a reproduction permission information acquisition device which acquires reproduction permission information from either one of a second recording medium different from the first recording medium or an external apparatus based on the acquired medium identity information, the reproduction permission information indicating whether or not a user permits reproduction of advertisement information representing advertisement content during reproduction of the content data; a determination device which determines an ability to reproduce the advertisement information based on at least the reproduction permission information; and an advertisement information acquisition device which externally acquires the advertisement information; wherein if the determination device determines that reproduction of the advertisement information is permitted, the reproduction device reproduces the acquired advertisement information while reproducing the content data.

According to the present invention, a title name for identifying a package medium is acquired from the package medium, and based on the title name, the medium identification is obtained from the identification card. Then, based on at least the medium identification, the ability to reproduce the advertisement information is determined, and the advertisement information is acquired from a control server. If it is determined that reproduction of the advertisement information has been permitted,the advertisementinformation is reproduced. Therefore, since the advertisement information can be reproduced during reproduction of the package medium, the selling price of the package medium can be set low. Also, the ability to reproduce the advertisement information is determined based on whether or not the medium identification is recorded on the identification card without requiring any new information recorded on the medium. Thus, the advertisement information can be inserted and reproduced for conventional media such as digital versatile discs without making modifications to the media.

In one aspect of the present invention can be achieved by the content data reproducing apparatus of the present invention. The content data reproducing apparatus of the present invention is further provided with an advertisement information storage device which stores the advertisement information acquired by the advertisement information acquisition device, wherein if the determination device determines that reproduction of the advertisement information is permitted, the reproducing device reproduces the advertisement information stored in the advertisement information storage device while reproducing the content data.

According to the present invention, the advertisement information stored in an advertisement information storage section is used for reproduction of the advertisement information. Even if a digital network cannot ensure an enough transmission rate and requires considerable time to download the advertisement information, the advertisement information stored in the advertisement information storage section will be sequentially reproduced. Therefore, the waiting time for a user during reproduction of the package medium can be reduced.

In another aspect of the present invention can be achieved by the content data reproducing apparatus of the present invention. The content data reproducing apparatus of the present invention is, wherein the determination device determines the ability to reproduce the advertisement information based on the reproduction permission information and operation information indicating an input operation provided by a user to the content data reproducing apparatus.

According to the present invention, a system control section of the content data reproducing apparatus determines the ability to reproduce the advertisement information based on the medium identification and an input operation performed by a user on a user interface section. Accordingly, reproduction of the advertisement information is disabled if the user performs predetermined input operation during reproduction of the package medium. Therefore, it is possible to add and reproduce the advertisement information while reflecting the intention of the user.

In further aspect of the present invention can be achieved by the content data reproducing apparatus of the present invention. The content data reproducing apparatus of the present invention is further provided with an insertion time information setting device that presets insertion time information indicating a reproduction time for the advertisement information that the reproducing device should reproduce during reproduction of the content data, wherein the reproducing device reproduces the advertisement information for up to the reproduction time indicated by the insertion time information while reproducing the content data.

According to the present information, a system control section presets the advertisement insertion amount that indicates the reproduction time of the advertisement information to be reproduced during reproduction of the package medium. The advertisement information is reproduced for up to the amount of time specified by the advertisement insertion amount. Accordingly, the amount of advertisement information can be increased or decreased according to the intention of the user when the package medium M is reproduced.

In further aspect of the present invention can be achieved by the content data reproducing apparatus of the present invention.
The content data reproducing apparatus of the present invention is, wherein the reproducing device stops reproducing the advertisement information if the user provides a predetermined input to the content data reproducing apparatus during reproduction of the advertisement information.

According to the present invention, when the advertisement information is being provided to a decoder via a switch, a predetermined input to the interface section provided by a user will cause the system control section to stop reproducing the advertisement information. That is, if the user performs the predetermined input operation, reproduction of the advertisement information is stopped in the content data reproducing apparatus. Therefore, the user can stop reproducing the advertisement information on the fly according to the user's intention, thereby enhancing the convenience for the user.

In further aspect of the present invention can be achieved by the content data reproducing apparatus of the present invention. The content data reproducing apparatus of the present invention is, wherein the reproducing device reproduces the advertisement information at a predetermined timing during reproduction of the content data.

According to the present invention, the content data reproducing apparatus reproduces the advertisement information at predetermined timings during reproduction of the package medium. Therefore, the advertisement insertion points can be set arbitrarily.

In further aspect of the present invention can be achieved by the content data reproducing apparatus of the present invention. The content data reproducing apparatus of the present invention is, wherein the reproducing device stops reproducing the content data when the predetermined timing is reached, and then the reproduction device reproduces the advertisement information if the user provides a predetermined input to the content data reproducing apparatus.

According to the present invention, the content data reproducing apparatus stops reproducing the package medium when the advertisement insertion point is reached. Then, only if the user provides a predetermined input to the user interface section, the advertisement information is reproduced. Since the advertisement information will not be reproduced unless the user performs the operation, the user can be prevented fromacquiringfraudulentpointsbyintentionallyreproducing the advertisement information that the user will not watch.

The above object of the present invention can be achieved by an advertisement information distribution system of the present invention. The advertisement information distribution system is provided with: an advertisement information distribution server including an advertisement information distribution device which distributes advertisement information representing advertisement content to a content data reproducing apparatus which reproduces content data recorded on a first recording medium; a reproducing device which reproduces the content data; an identity information acquisition device which acquires medium identity information as identity information about the first recording medium; a reproduction permission information acquisition device which acquires reproduction permission information from either one of a second recording medium different from the first recording medium or an external apparatus based on the acquired medium identity information, the reproduction permission information indicating whether or not a user permits reproduction of the advertisement information during reproduction of the content data; a determination device which determines an ability to reproduce the advertisement information based on at least the reproduction permission information; and an advertisement information acquisition device which externally acquires the advertisement information; and wherein if the determination device determines that reproduction of the advertisement information is permitted, the reproducing device reproduces the acquired advertisement information while reproducing the content data.

According to the present invention, a title name for identifying a package medium is acquired from the package medium, and based on the title name, the medium identification is obtained from the identification card. Then, based on at least the medium identification, the ability to reproduce the advertisement information is determined, and the advertisement information is acquired from a control server. If it is determined that reproduction of the advertisement information has been permitted, the advertisement information is reproduced. Accordingly, since the advertisement information can be reproduced during reproduction of the package medium, the selling price of the package medium can be set low. Also, the ability to reproduce the advertisement information is determined based on whether or not the medium identification is recorded on the identification card without requiring any new information recorded on the medium. Thus, the advertisement information can be inserted and reproduced for conventional media such as digital versatile discs without making modifications to the media.

In one aspect of the present invention can be achieved by the advertisement information distribution system of the present invention. The advertisement information distribution system of the present invention is further provided with a network that includes the content data reproducing apparatus, wherein the advertisement information distribution server further includes a data amount changing device for changing a data amount of the advertisement information to be transmitted to the content data reproducing apparatus depending on a transmission rate of the network, and wherein the advertisement information distribution device of the advertisement information distribution server distributes the advertisement information to the content data reproducing apparatus with the data amount changed by the data amount changing device.

According to the present invention, a control further includes the data amount reduction device, which, depending on the transmission rate of the network that includes the content data reproducing apparatus, changes the data amount of the advertisement information to be distributed to the content data reproducing apparatus. The control server reduces the data amount of the advertisement information by means of the data amount reduction device and distributes the reduced advertisement information to the content data reproducing apparatus. Accordingly the advertisement information is distributed to the content data reproducing apparatus after its data amount is reduced according to the transmission rate of the network that includes the content data reproducing apparatus. Therefore, it is possible to distribute the advertisement information of reduced data amount according to the transmission rate of the network and thereby to reduce the waiting time for a user.

In another aspect of the present invention can be achieved by the advertisement information distribution system of the present invention. The advertisement information distribution system of the present invention is further provided with an accounting apparatus includes: an accounting device which settles an account when the user of the content data reproducing apparatus purchases the recording medium; a subtracting device which reduces a total price based on the monetary data recorded on the external apparatus; and a monetary data writing device which overwrites the monetary data in the external apparatus with the monetary data recorded in the external apparatus minus an amount corresponding to an amount of money used by the user.

According to the present invention, when a user purchases a package medium using points, the number of points recorded on the identification card is read by a shop terminal. Then, the total price is reduced based on the points, and the number of points recorded on the card is updated. Therefore, the user can obtain a discount according to the acquired points when purchasing the package medium.

The above object of the present invention can be achieved by an advertisement information distribution method of the present invention. The advertisement information distribution method is provided with: a first step of acquiring medium identity information as identity information about the first recording medium by a content data reproducing apparatus which reproduces content data recorded on a first recording medium; a second step of acquiring reproduction permission information from either one of a second recording medium different fromthe first recordingmediumor an external apparatus based on the acquired medium identity information, the reproduction permission information indicating whether or not a user permits reproduction of advertisement information representing advertisement content during reproduction of the content data; a third step of determining an ability to reproduce the advertisement information based on at least the reproduction permission information; a fourth step of externally acquiring the advertisement information; and a fifth step of, if it is determined that reproduction of the advertisement information is permitted in the third step, reproducing the acquired advertisement information while reproducing the content data.

According to the present invention, since the advertisement information can be reproduced during reproduction of the package medium, the selling price of the package medium can be set low. Also, the ability to reproduce the advertisement information is determined based on whether or not the medium identification is recorded on the identification card without requiring any new information recorded on the medium. Thus, the advertisement information can be inserted and reproduced for conventional media such as digital versatile discs without making modifications to the media.

The above object of the present invention can be achieved by an information recording media of the present invention.

The information recording medium in which an content data reproducing program to reproduce content data recorded on a first medium is recorded in a readable way by a computer included in a content data reproducing apparatus, the program causing the computer to function as: an identity information acquisition device which acquires medium identity information as identity information about the first recording medium; a reproduction permission information acquisition device which acquires reproduction permission information from either one of a second recording medium different from the first recording medium or an external apparatus based on the acquired medium identity information, the reproduction permission information indicating whether or not a user permits reproduction of advertisement information representing advertisement content during reproduction of the content data; a determination device which determines an ability to reproduce the advertisement information based on at least the reproduction permission information; an advertisement information acquisition device which externally acquires the advertisement information; and a reproducing device which reproduces content data, wherein if the determination device determines that reproduction of the advertisement information is permitted, the reproducing device reproduces the acquired advertisement information while reproducing the content data.

According to the present invention, since the advertisement information can be reproduced during reproduction of the package medium, the selling price of the package medium can be set low. Also, the ability to reproduce the advertisement information is determined based on whether or not the medium identification is recorded on the identification card without requiring any new information recorded on the medium. Thus, the advertisement information can be inserted and reproduced for conventional media such as digital versatile discs without making modifications to the media.

### BRIEF DESCRIPTION OF THE DRAWINGS

FIG. 1 is a block diagram showing a configuration of an advertisement information distribution system 1 according to an embodiment;
FIG. 2 is a diagram showing an outline of an advertising method implemented in the advertisement information distribution system 1 according to the embodiment;
FIG. 3 is a diagram showing an example of information recorded on an ID card C according to the embodiment;
FIG. 4 is a block diagram showing a configuration of a media reproduction apparatus MP-k according to the embodiment;
FIG. 5 is a block diagram showing a configuration of a control server CS according to the embodiment;
FIG. 6 is a diagram showing an example of content of an advertisement information DB 24 according to the embodiment;
FIG. 7 is a diagram showing an example of content of a user management table TBL1 according to the embodiment;
FIG. 8 is a diagram showing an example of content of an advertisement registration table TBL2 according to the embodiment;
FIG. 9 is a flowchart showing processing performed by a system control section 106 of the media reproduction apparatus MP-k according to the embodiment;
FIG. 10 is a flowchart showing details of reproduction mode determination processing performed by the system control section 106 of the media reproduction apparatus MP-k according to the embodiment;
FIG. 11 is a flowchart showing details of the reproduction mode determination processing performed by the system control section 106 of the media reproduction apparatus MP-k according to the embodiment;
FIG. 12 is a flowchart showing details of package medium reproduction processing performed by the system control section 106 of the media reproduction apparatus MP-k according to the embodiment;
FIG. 13 is a flowchart showing details of the package medium reproduction processing performed by the system control section 106 of the media reproduction apparatus MP-k according to the embodiment;
FIG. 14 is a flowchart showing details of the package medium reproduction processing performed by the system control section 106 of the media reproduction apparatus MP-k according to the embodiment;
FIG. 15 is a flowchart showing processing performed in a shop terminal ST-1 according to the embodiment;
FIG. 16 is a flowchart showing details of transmission rate computation processing performed by the system control section 106 of the media reproduction apparatus MP-k according to a variation 1;
FIG. 17 is a flowchart showing details of amount reduction processing performed by an advertisement information distribution unit 212 of the control server CS according to the variation 1; and
FIG. 18 is a flowchart showing processing performed by the system control section 106 of the media reproduction apparatus MP-k according to a variation 2.

### DETAILED DESCRIPTION OF THE PREFERRED EMBODIMENTS

Now, embodiments of the present invention will be described below referring to the drawings. These embodiments are not intended to limit the present invention, but any modifications may be made thereto within the scope of the technical concept of the present invention.

### [1] First embodiment

### [1.1] Outline of first embodiment

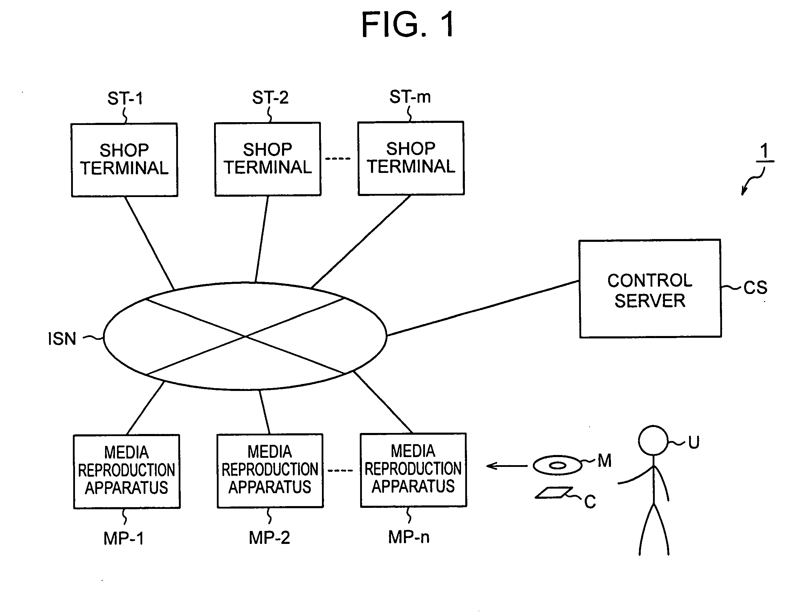

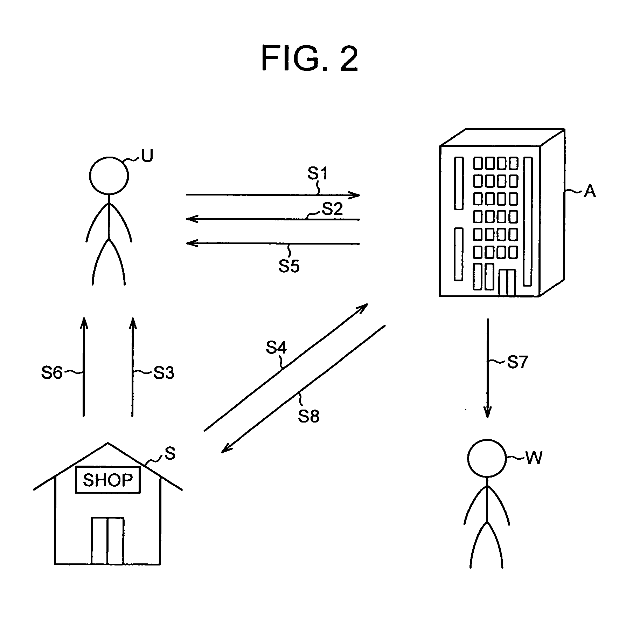

Before describing a specific configuration of an advertisement information distribution system 1 of the present invention, an outline of an advertisement information distribution method implemented in the advertisement information distribution system 1 will be described referring to FIGS. 1 and 2. FIG. 1 shows a configuration of the advertisement information distribution system 1 in this embodiment, and FIG. 2 shows the outline of the advertisement information distribution method implemented in the system 1. In FIG. 1, only certain shop terminals ST-1 and media reproduction apparatuses MP-k are shown among a plurality of shop terminals ST-1 (1=1, 2, ..., m) and media reproduction apparatuses MP-k (k=1, 2,..., n).

This advertisement information distribution system is implemented among four entities: an advertising agency A including an advertiser; a user U who is a consumer of a package medium M such as a DVD; a copyright owner W for content data recorded on the package medium M; and a media shop S. As to the correspondence of the entities in FIG. 2 to FIG. 1, the user U has a media reproduction apparatus MP-k, the shop S has a shop terminal ST-1, and the advertising agency A has a control server CS.

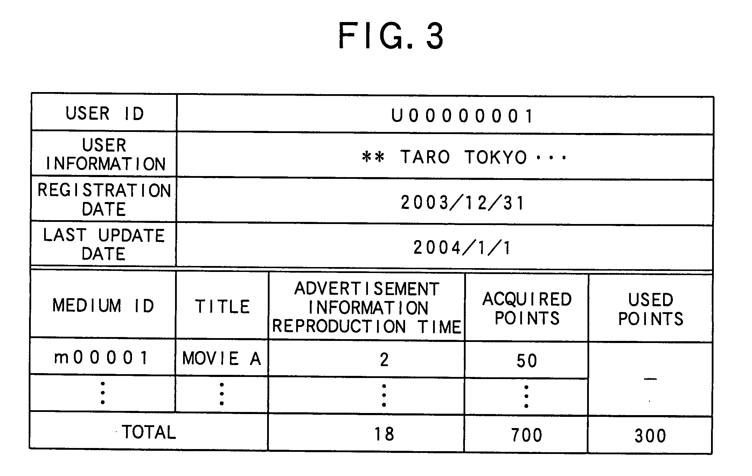

In this embodiment, first it is required that the user U register his own information with the control server CS owned by the advertising agency A (step S1) and receive an ID card C (step S2). The ID card C is issued by the advertising agency A to the user U and has recorded thereon various types of information for managing the user U as will be described below (FIG. 3). The registration of information by the user U and the issuance of the ID card C may be performed in any manner. For example, when the user U purchases the medium, the user may use the shop terminal ST-1 to register his personal information with the control server CS and receive the ID card C.

When purchasing the package medium M, the user U presents his ID card C to a salesperson in the shop S. The user U tells that he wants advertisement information to be reproduced during reproduction of the package medium M and requests registration of the package medium M (step S3). In response to the request from the user U, the salesperson of the shop S uses the shop terminal ST-1 to record information about the package medium M purchased by the user U on the ID card C, and to register the user U' s purchase of the package medium M with the control server CS owned by the advertising agency A (step S4).

When the user U tries to reproduce the purchased package medium M, the user U inserts both the purchased package medium M and the ID card C into the media reproduction apparatus MP-k. If the package medium M to be reproduced is registered with the ID card C, that is, if the user U desired insertion and reproduction of advertisement information when he purchased the package medium M, the media reproduction apparatus MP-k reproduces the package medium M with advertisement information inserted. To do so, the media reproduction apparatus MP-k downloads the advertisement information from the control server CS and inserts it at predetermined timings into the content data being reproduced (step S5).

However, even though the user U desired to reproduce advertisement information when he purchased the package medium M, he may not desire so when he reproduces the medium. Therefore, this embodiment allows the user U to prohibit the media reproduction apparatus MP-k from reproducing the advertisement information.

The media reproduction apparatus MP-k records points on the ID card C according to the amount of inserted advertisement information, that is, the amount of time for which the advertisement information was reproduced, and uploads the number of points to the control server CS.

These points correspond to monetary value. If the user U purchases a package medium M in the shop S at a later time, the user U can present the ID card C to receive a discount according to the number of points (step S6).

Here, if the user U uses the points to purchase the package medium M, this will cause a loss for the shop S and the copyright owner W by the amount corresponding to the points. Therefore, according to the amount of points used by the user U, the advertising agency A pays the copyright owner W and the shop S out of the advertising revenue collected from the advertiser (steps S7, S8).

### [1.2] Configuration of first embodiment

### (1) Overall system configuration

Now, based on the system configuration of the advertisement information distribution system 1 that implements the above-described advertising method, a configuration of the advertisement information distribution system 1 according to this embodiment of the present invention will be described using FIG. 1.

As shown in FIG. 1, the advertisement information distribution system 1 according to this embodiment includes the media reproduction apparatuses MP-k owned by respective users U, the ID card C, the control server CS, a public digital network ISN, and the shop terminals ST-1.

By way of example, the media reproduction apparatus MP-k in this embodiment embodies a "content data reproduction apparatus" of the present invention, and the ID card C embodies a "second recording medium. " Also by way of example, the control server CS embodies an "advertisement information distribution server," and the shop terminal ST-1 embodies an "accounting apparatus."

The public digital network ISN is a network such as an ISDN (Integrated Service Digital Network) , an FTTH (Fiber To The Home) network, or the Internet. It provides data communication services for the media reproduction apparatuses MP-k, shop terminals ST-1, and control server CS included in the network. The public digital network ISN may be a single network, or may be in other configurations including an FTTH network and the Internet connected to each other via an access point (not shown).

The ID card C has, for example, a contactless IC chip conformable to ISO/IEC10536, so that a reader/writer may be used to write various types of data thereon and to read data recorded in the chip. As described above, in this embodiment, information shown in FIG. 3 is recorded on the ID card C.

As shown in FIG. 3, the ID card C has data recorded thereon, such as a user ID for the user U to whom the ID card C has been issued, user information such as the user name, a registration date for the user U, and a last update date of the various data items. These data items are recorded on the ID card C when the user U is registered with the advertising agency A in the above-described step S1. The user ID is identity information assigned to each user at the time of registration for distinguishing the user U from other users U. In the advertisement information distribution system 1 according to this embodiment, each user U is identified based on this user ID.

The ID card C further includes medium IDs, and for each medium ID, includes a title of the content data, a reproduction time of advertisement information, and a counter for counting points granted to the user U during reproduction of the package medium M. Further, a total of points acquired by the user U is recorded. The medium ID is identity information for identifying package media M supplied in the market, and it is assigned to each title of content data recorded on package media M. The medium ID corresponds to "reproduction permission information" of the present invention.

These data items are recorded by the shop terminal ST-1 at the time of purchase of the package medium M and updated by the media reproduction apparatus MP-k at the time of reproduction of the medium M. It should be noted that the medium IDs recorded on the ID card C are only those for which the user U has permitted reproduction of advertisement information at the time of purchase. Thus, by referring to the medium IDs recorded on the ID card C, one can know which package media M have been permitted by each user U to be reproduced with advertisement information inserted thereto.

The shop terminal ST-1 is a communication terminal such as a POS (Point Of Sales) terminal provided in the shop S and communicates data with the control server CS via the public digital network ISN. The shop terminal ST-1 includes a reader/writer for IC chips to read/write data from/to the ID card C issued to the user U.

The shop terminal ST-1 also includes a network interface ("interface" is abbreviated as "I/F" hereafter) to communicate data with the control server CS via the public digital network ISN. With this function, the shop terminal ST-1 uploads to the control server CS data on the ID card C, such as the medium IDs, recorded when the user U purchased the package medium M. Thus, the data is shared between the ID card C and the control server CS.

The control server CS then distributes advertisement information to the media reproduction apparatus MP-k. Specifically, the control server CS maintains various types of advertisement information to be distributed to the media reproduction apparatus MP-k in a database. The control server CS distributes the advertisement information to the media reproduction apparatus MP-k according to a request message from the media reproduction apparatus MP-k.

The media reproduction apparatus MP-k, which is a reproduction apparatus such as a DVD recorder, reproduces the package medium M to be reproduced and processes content data recorded on the medium M. The media reproduction apparatus MP-k includes a reader/writer for IC chips to read or update data recorded on the ID card C.

Further, when the content data recorded on the package medium M is going to be reproduced, the media reproduction apparatus MP-k determines whether or not insertion and reproduction of advertisement information has been permitted for the package medium M that is going to be reproduced. This determination is made based on information such as the medium IDs read from the ID card C. If it is determined that insertion and reproduction of advertisement information has been permitted for the package medium M, the media reproduction apparatus MP-k attempts to obtain confirmation from the user U as to reproducing advertisement information. If the user U permits reproduction of advertisement information, the media reproduction apparatus MP-k downloads advertisement information from the control server CS and reproduces it during reproduction of the content data. A specific configuration of the media reproduction apparatus MP-k will be described below.

### (2) Specific configuration of media reproduction apparatus MP-k

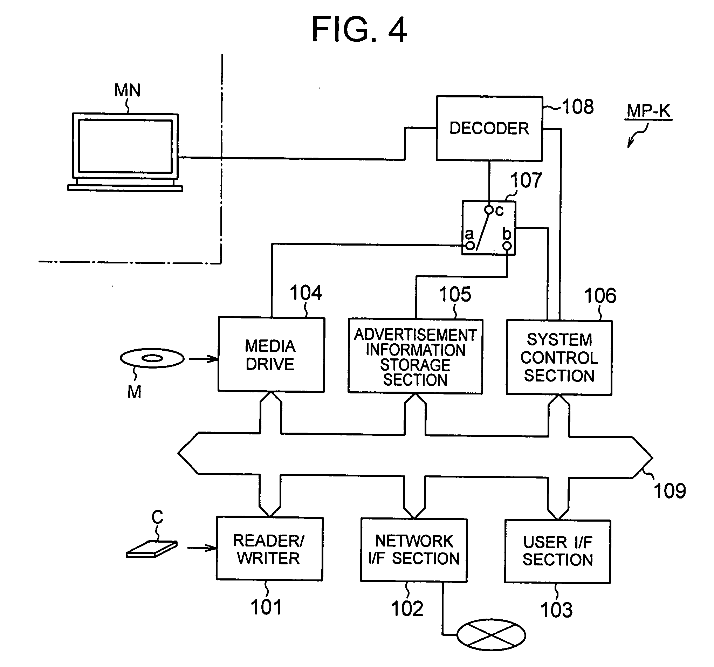

Now, a specific configuration of the above-described media reproduction apparatus MP-k will be described using FIG. 4. As shown in FIG. 4, the media reproduction apparatus MP-k according to this embodiment includes a reader/writer 101, a network interface section 102 ("interface" is abbreviated as "I/F" hereafter), a user I/F section 103, a media drive 104, an advertisement information storage section 105, a system control section 106, a switch 107, a decoder 108, and a data bus 109 that connects these components to each other.

By way of example, the media drive 104, system controlling section 106, switch 107, and decoder 108 of this embodiment embody a "reproduction device" of the present invention. The media drive 104 embodies an "identity information acquisition device," and the reader/writer 101 embodies a "reproduction permission information acquisition device" and a "writing device." The system control section 106 of this embodiment embodies a "determination device" of the present invention, the network I/F section 102 embodies an "advertisement information acquisition device," and the advertisement information storage section 105 embodies an "advertisement information storage device."

The reader/writer 101 has an insertion slot for the ID card C to read data recorded on the inserted ID card C and to output the data to the data bus 109. The reader/writer 101 also updates data recorded on the ID card C inserted in the insertion slot according to a control signal that is input via the data bus 109.

The network I/F section 102 facilitates data transmission and reception between the public digital network ISN and the data bus 109. The network I/F section 102 outputs data received from the public digital network ISN to the data bus 109 and transmits data that is input via the data bus 109 to the public digital network ISN.

The user I/F section 103 has an operation unit or an external remote controller, which consists of a keyboard (not shown) or other components. The user I/F section 103 outputs input signals corresponding to input operations performed by the user U to the system control section 106.

The media drive 104 is, for example, a recording and reading apparatus for package media M such as DVDs. It reads data recorded on the package medium M and provides the data to a terminal a of the switch 107 in response to a control signal that is input via the data bus 109.

The decoder 108, under the control of the system control section 106, decodes content data that is input via the switch 107, converts the decoded data to video signals and sound signals, and outputs the signals to a monitor MN. As a result, the monitor MN displays video and outputs audio according to the content data.

The switch 107 has three terminals a, b, and c. The terminal a is connected to an output side of the media drive 104, the terminal b is connected to an output side of the advertisement information storage section 105, and the terminal c is connected to an input side of the decoder 108. Under the control of the system control section 106, the switch 107 changes its connection between the terminals a and b to switch signals that is input to the terminal c. As a result, the switch 107 connected to the terminal a will cause data output from the media drive 104 to be input to the decoder 108. The switch 107 connected to the terminal b will cause data output from the advertisement information storage section 105 to be input to the decoder 108. The switch 107 may be either physical or logical.

The advertisement information storage section 105 stores advertisement information downloaded from the control server CS. The advertisement information storage section 105 may be configured with any hardware, for example a hard disk.

The system control section 106 includes, for example, a CPU (Central Processing Unit) , ROM (Read Only Memory) , RAM (Random Access Memory), and EEPROM (Electrically Erasable Programmable Read Only Memory) (not shown) and controls the components of the media reproduction apparatus MP-k.

When the content data recorded on the package medium M is going to be reproduced, the system control section 106 outputs a control signal to the reader/writer 101. On receiving this control signal, the reader/writer 101 detects whether or not the ID card C is inserted in the insertion slot and outputs a signal corresponding to the detection result to the system control section 106.

If the ID card C is detected, the system control section 106 again outputs a control signal to the reader/writer 101 for causing the reader/writer 101 to read data recorded on the ID card C. As a result, data recorded on the ID card C is read and provided to the system control section 106. Based on the result of this processing, the system control section 106 selects one of the following two reproduction modes and performs reproduction processing according to the selected mode.

### <Advertisement-inserted reproduction mode>

This mode downloads advertisement information from the control server CS when content data recorded on the package medium M is going to be reproduced, and reproduces the advertisement information inserted at predetermined timings during reproduction of the content data. To be set to this mode, it is required that
(a) insertion of the ID card C in the reader/writer 101 be detected, and
(b) data such as the medium ID for the package medium M to be reproduced have been recorded on the ID card C. This means that the user U permitted insertion of advertisement information when he purchased the package medium M that is going to be reproduced, and the medium ID for the package medium M was recorded on the ID card C.

Even if the above conditions are met, the user U may desire to disable reproduction of advertisement information when actually reproducing the medium. Therefore, even if the above conditions are met, the system control section 106 asks the user U whether or not to disable reproduction of advertisement information. Then, only if the user U provides an input to the user I/F section 103 indicating that the user U will not disable reproduction of advertisement information, the system control section 106 sets the reproduction mode to the advertisement-inserted reproduction mode.

Once this mode is set, the system control section 106 first sends to the control server CS a request message including the medium ID of the package medium M to be reproduced. When advertisement information is returned from the control server CS in response to this message, the system control section 106 stores the advertisement information in the advertisement information storage section 105. After the download of the advertisement information is completed in this manner, the system control section 106 starts reproducing the package medium M. While reproducing the medium, the system control section 106 outputs control signals to the media drive 104, the advertisement information storage section 105, and the switch 107 at advertisement information reproduction timings (referred to as "insertion points" hereafter). As a result, the media drive 104 reproducing the package medium M pauses, the switch 107 changes its connection from the terminal a to the terminal b, and the advertisement information output from the advertisement information storage section 105 is input to the decoder 108.

When the reproduction of the advertisement information is finished, the system control section 106 again outputs control signals to the media drive 104, the advertisement information storage section 105, and the switch 107. As a result, the media drive 104 is released from the pause state, the switch 107 changes its connection from the terminal b to the terminal a, and output signals from the media drive 104 are input to the decoder 108.

The advertisement insertion points in reproducing the content data in this mode may be determined in any manner. For example, the user U may select the advertisement insertion points when reproducing the content data, or chapters of the content data recorded on the package medium M may be referred to in order to set the advertisement insertion points to those chapters.

Alternatively, advertisement information may be inserted into turning points of video scenes of content corresponding to the content data by extracting the turning points using a story classification technique described in Japanese Patent Application No. 2003-390977. In that case, the following processing will be required: adding extra information indicating characters to the content data recorded on the package medium M; computing an appearance probability for each character appearing in each frame based on the extra information; determining a main character for each scene based on the appearance probability; and determining scenes where the main character changes, which are the turning points. This technique is described in detail in the above patent application and will not be further described herein.

Also, the copyright owner W may determine the advertisement insertion points in advance using the above story analysis technique and register the determined advertisement insertion points with the control server CS. In this manner, the media reproduction apparatus MP-k may access the control server CS to refer to the advertisement insertion points when reproducing the package medium M.

In addition, in this reproduction mode, the system control section 106 updates the counter for counting the number of points recorded on the ID card C and uploads data including the updated number of points to the control server CS. As a result, data such as the number of points acquired by the user U is shared between the ID card C and the control server CS. If the user U purchases a package medium M using the acquired points, the user U can present the ID card C to the shop S to receive a discount according to the number of points as described above.

### <Normal reproduction mode>

This mode reproduces the content data recorded on the package medium M without downloading or inserting advertisement information from the control server CS. If the above conditions (a) and (b) are not met, it cannot be known, on reproduction of the package medium M that is going to be reproduced, whether or not the user U has permitted insertion of advertisement information. Therefore, if either of the above conditions (a) or (b) is not met, the system control section 106 reproduces the content data in the normal reproduction mode.

Further, as described above, the user U may desire to disable reproduction of advertisement information when reproducing the package medium M. Therefore, the system control section 106 asks the user U whether or not to permit reproduction of advertisement information. If the user U performs an input operation for disabling reproduction of advertisement information, the system control section 106 reproduces the package medium M in the normal mode.

### (3) Specific configuration of control server CS

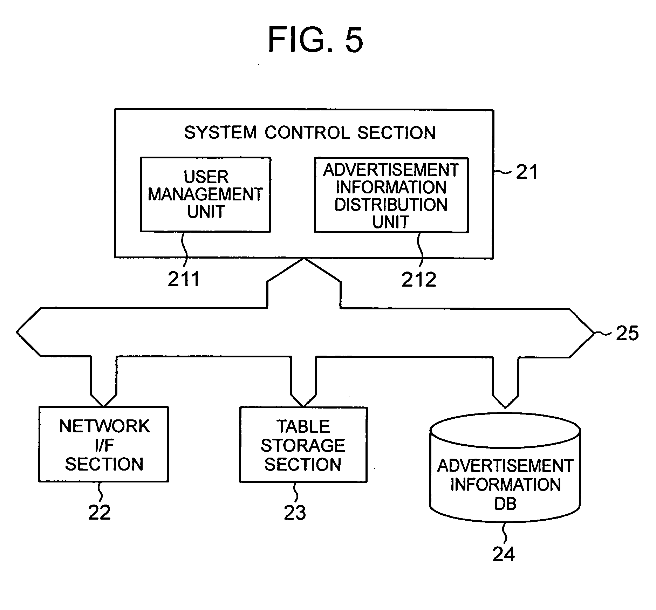

Now, referring to FIG. 5, a specific configuration of the control server CS according to this embodiment will be described. FIG. 5 is a block diagram showing a configuration of the control server CS according to this embodiment. As shown, the control server CS according to this embodiment includes a system control section 21, a network I/F section 22, a table storage section 23, an advertisement information DB 24, and a data bus 25 that connects these components to each other.

The network I/F section 22 facilitates data transmission and reception between the public digital network ISN and the data bus 25. The network I/F section 22 outputs data received from the public digital network ISN to the data bus 25 and transmits data that is input via the data bus 25 to the public digital network ISN.

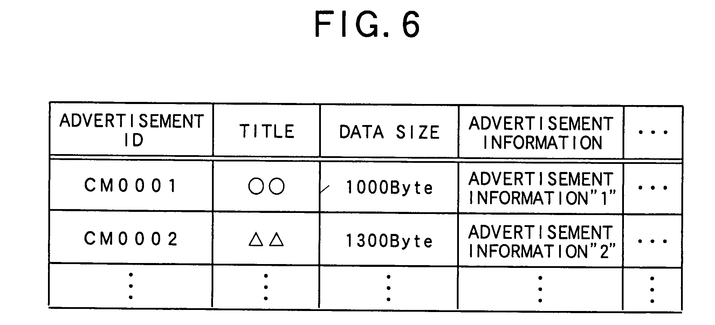

The advertisement information DB 24 has stored therein various types of advertisement information to be distributed to the media reproduction apparatuses MP-k. FIG. 6 shows an example of content of the advertisement information DB 24. As shown, for each advertisement ID for identifying advertisement information, the advertisement information DB 24 in this embodiment stores data such as a title and data size of the advertisement information and the advertisement information itself.

The system control section 21 includes a CPU, ROM, RAM, and EEPROM (not shown) and controls the components of the control server CS. The system control section 21 includes a user management unit 211 and an advertisement information distribution unit 212, which have the following functions respectively.

### a) User management unit 211

As described above, when the user U purchases the package medium M, the user U can determine whether or not to permit reproduction of advertisement information during reproduction of the package medium M. If the user U permits insertion of advertisement information, the medium ID for the package medium M written on the ID card C is sent from the shop terminal ST-1 and received by the network I/F section 22 of the control server CS.

After the advertisement information is reproduced during reproduction of the package medium M, the media reproduction apparatus MP-k increments the counter for the above-described points recorded on the ID card C. The updated number of points is uploaded to the control server CS and received by its network I/F section 22.

Further, if the user U purchases a package medium M using points acquired by reproducing the advertisement information, the shop terminal ST-1 decrements the number of points recorded on the ID card C. The decremented number of points is sent to the control server CS and received by the network I/F section 22 of the control server CS.

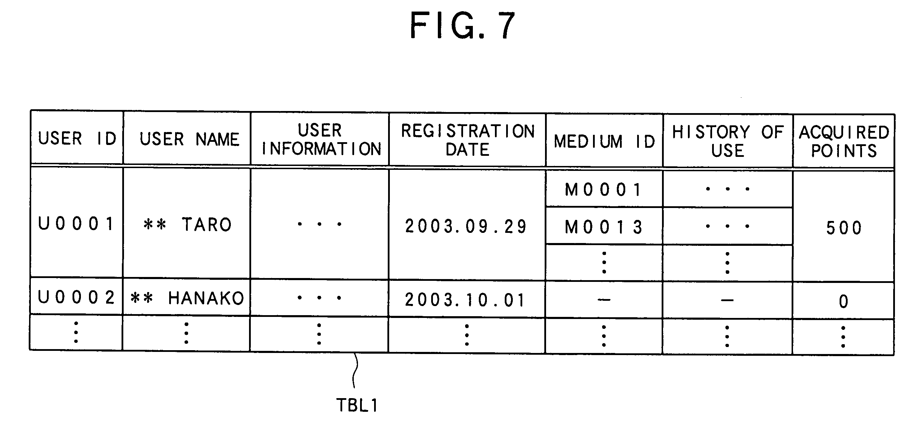

The user management unit 211 manages the data sent from the media reproduction apparatus MP-k and the shop terminal ST-1 and received by the network I/F section 22 in this manner. To implement this function, the table storage section 23 according to this embodiment has stored thereon a user management table TBL1. FIG. 7 shows an example of content of the user management table TBL1.

As shown in FIG. 7, for each user ID for a user U, the user management table TBL1 in this embodiment stores a user name of the user U for the user ID, user information including the user's address for example, and a registration date for the user U. These information items are stored in the user management table TBL1 when the user U is registered, that is, when the ID card C is issued.

The user management table TBL1 also stores, for each user ID, medium IDs and history of use of package media M. A medium ID corresponds to a package medium M for which the user U has permitted insertion of advertisement information, and the medium ID is sent from the shop terminal ST-1 when the package medium M is purchased. Thus, these medium IDs are the same as the medium IDs recorded on the ID card C, and by referring to the medium IDs recorded on the ID card C, the system control section 21 of the control server CS can know package media M for which each user U has permitted insertion of advertisement information. Fields for storing these items such as the medium IDs are expanded as more medium IDs are sent from the shop terminal ST-1.

Further, the user management table TBL1 stores, for each user ID, a field for storing the number of points acquired by the user U corresponding to that user ID. The number of points stored in this field is updated when the incremented number of points is received from the media reproduction apparatus MP-k or when the decremented number of points is received from the shop terminal ST-1. Thus, the user management table TBL1 always reflects the updates to the number of points on the ID card C.

### b) Advertisement information distribution unit 212

The advertisement information distribution unit 212 has a function of distributing replacing advertisement information in response to a request message received from the media reproduction apparatus MP-k. Logically, this function is implemented by providing the system control section 21 with a function such as an FTP (File Transfer Protocol) file server function.

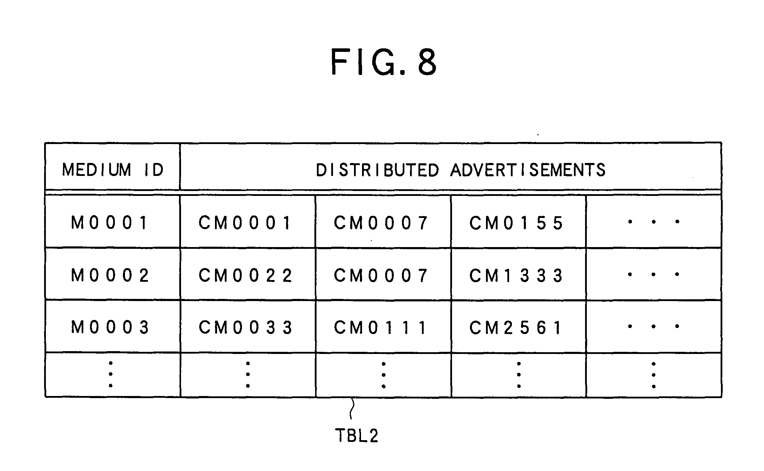

In this embodiment, the table storage section 23 has stored therein an advertisement registration table TBL2 along with the above-described user management table TBL1. FIG. 8 shows content of the advertisement registration table TBL2. As shown, the advertisement registration table TBL2 stores advertisement IDs for each medium ID. In this advertisement registration table TBL2, the advertisement IDs for each medium ID correspond to the advertisement information to be distributed to the media reproduction apparatus MP-k during reproduction of the package medium M corresponding to that medium ID.

When the request message with a medium ID is received from the media reproduction apparatus MP-k for downloading advertisement information as described above, the advertisement information distribution unit 212 searches the advertisement registration table TBL2 based on the medium ID. The advertisement information distribution unit 212 then reads advertisement IDs for that medium ID and returns the advertisement information corresponding to the advertisement IDs to the media reproduction apparatus MP-k.

The advertisement information to be distributed for reproduction of the package medium M corresponding to each medium ID may be determined in any manner. For example, the advertising agency A may determine the advertisement information to be distributed to meet requests from advertisers. Alternatively, the advertisement information to be distributed may be determined with the above-described story classification technique described in Japanese Patent Application No. 2003-390977 by selecting advertisement information that matches the content data recorded on the package medium M in terms of story.

### [1.3] Operation of first embodiment

### (1) Outline of operation in reproducing package medium

Now, an outline of operation of the advertisement information distribution system 1 according to this embodiment will be described. In the following description, it is assumed that the package medium M has been registered at the time of purchase of the package medium M, and that information such as the medium ID has been recorded on both the ID card C and the user management table TBL1 of the control server CS.

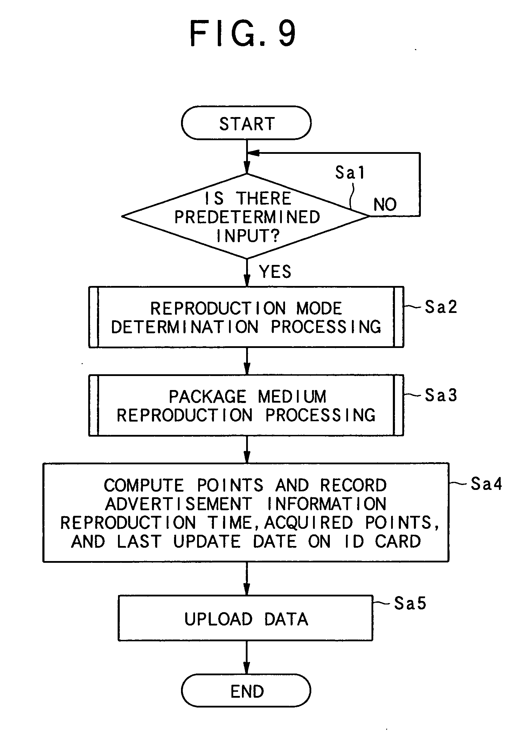

First, when the user U powers up the media reproduction apparatus MP-k, the system control section 106 of the media reproduction apparatus MP-k starts processing shown in FIG. 9. FIG. 9 is a flowchart showing processing performed by the system control section 106 of the media reproduction apparatus MP-k.

In this processing, the system control section 106 determines whether or not an input operation for reproducing the package medium M has been performed (step Sa1). The processing in this step is repeated ("no") until the user Uperforms the input operation for reproduction. In this state, the user U sets in the media drive 104 the package medium M to be reproduced, and sets the ID card C in the reader/writer 101.

When the user U performs the input operation for reproducing the package medium M on the user I/F section 103 of the media reproduction apparatus MP-k, the system control section 106 makes a determination of "yes" in step Sa1 and performs reproduction mode determination processing (step Sa2). The system control section 106 performs the reproduction mode determination processing (step Sa2) to determine whether to reproduce the package medium M in the above-described normal reproduction mode or advertisement-inserted reproduction mode.

The system control section 106 then performs package medium reproduction processing (step Sa3). It downloads the advertisement information from the control server CS prior to reproducing the package medium M and reproduces the package medium M with the advertisement information inserted therein. As will be described in detail below, in this package medium reproduction processing, the system control section 106 accumulates the reproduction time of the advertisement information (Sa3).

The system control section 106 computes the number of points to be granted to the user U based on the reproduction time of the advertisement information and outputs a control signal to the reader/writer 101 (step Sa4). As a result, the reproduction time recorded on the ID card C for the medium ID corresponding to the package medium M being reproduced is increased, and the counter for counting the acquired points on the ID card C is incremented by the computed number of points.

The number of points may be computed in any manner in step Sa4. For example, one point may be granted every 15 seconds for the reproduction time of the advertisement information accumulated in step Sa4. Alternatively, the number of points to be granted may vary for each advertisement so that the user U is granted different number of points depending on advertisements reproduced.

When the above processing is completed, the system control section 106 uploads data such as the updated number of points recorded on the ID card C to the control server CS (step Sa5) and terminates the processing. Here, the system control section 106 outputs a control signal to the reader/writer 101 for reading the user ID from the ID card C, and attaches the user ID to the data to be uploaded to the control server CS.

When the data is received at the control server CS from the media reproduction apparatus MP-k, the user management unit 211 searches the user management table TBL1 based on the user ID attached to the received data and updates the number of points for the user ID. As a result, the number of points stored in the usermanagement table TBL1 is increased, so that the number of points recorded on the ID card C matches that stored in the user management table TBL1.

### (1-1) Reproduction mode determination processing

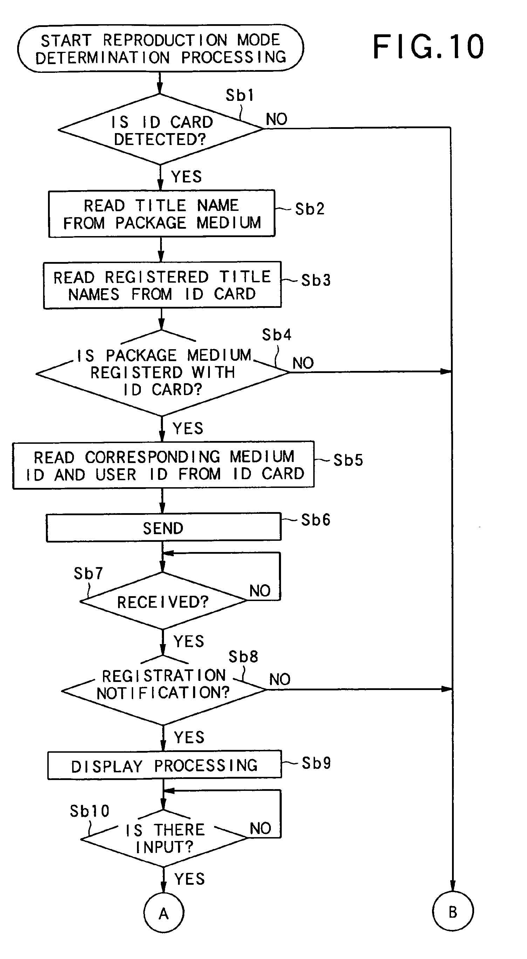

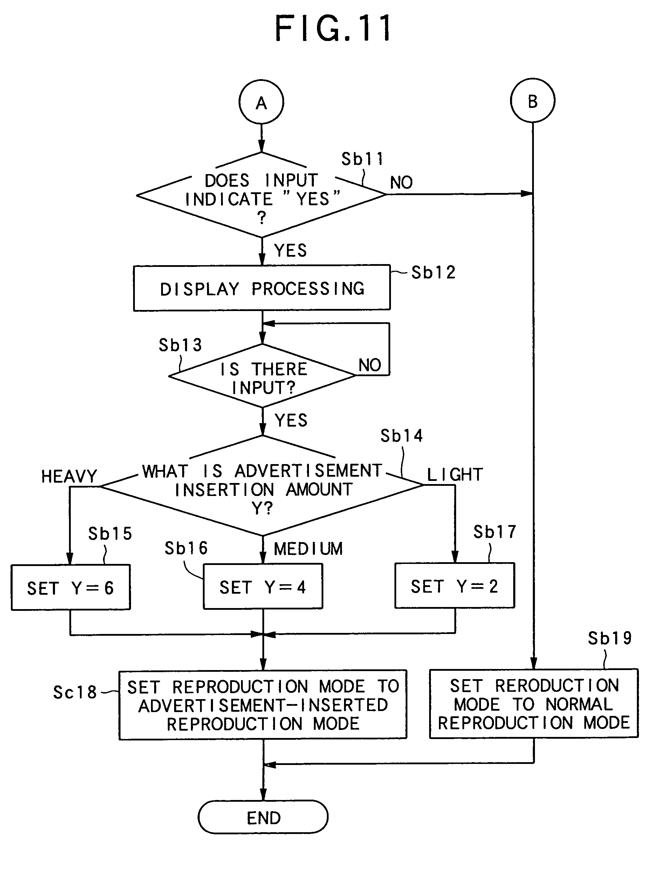

Now, referring to FIGS. 10 and 11, the reproduction mode determination processing performed in the above-described step Sa2 will be described. FIGS. 10 and 11 are a flowchart showing details of the reproduction mode determination processing performed by the system control section 106 of the media reproduction apparatus MP-k.

As shown, inthisprocessing, the systemcontrol section 106 first outputs a control signal to the reader/writer 101 to determine whether or not insertion of the ID card C is detected (step Sb1). If the determination is "no, " the system control section 106 sets the reproduction mode to the normal reproduction mode (step Sb19) and terminates the processing.

On the other hand, if the determination is "yes" in step Sb1, the system control section 106 outputs a control signal to the media drive 104 to read the title name of the content recorded on the package medium M (step Sb2). Then, the system control section 106 outputs a control signal to the reader/writer 101 to read all title names recorded on the ID card C (step Sb3).

The system control section 106 then determines whether or not the package medium M to be reproduced is registered with the ID card C by comparing the title names read out (step Sb4). Specifically, if the same title name as the title name read from the package medium M is included in the title names read from the ID card C, the system control section 106 makes a determination of "yes" in this determination step. Otherwise, the system control section 106 makes a determination of "no." Therefore, in step Sb4, the determination is "yes" if reproduction of advertisement information during reproduction of the package medium M has been permitted, while "no" if not permitted.

If the determination is "no, " the systemcontrol section 106 sets the reproduction mode to the normal reproduction mode (step Sb19) and terminates the processing.

On the other hand, if the determination is "yes" in step Sb4, the system control section 106 reads from the ID card C a medium ID corresponding to the title name, as well as a user ID, and stores them in RAM (not shown) (step Sb5). The system control section 106 further sends the medium ID and the user ID to the control server CS (step Sb6) and waits for data to be sent from the control server CS (step Sb7).

When the data is received at the control server CS, the user management unit 211 searches the user management table TBL1 based on the received user ID and the medium ID. According to the search result, the user management unit 211 selectively sends one of the following two types of data to the media reproduction apparatus MP-k.

### a) Registration notification

This notification is data indicating that reproduction of advertisement information during reproduction of the package medium M has been permitted. This notification is sent if the same user ID as the received user ID is stored in the user management table TBL1 and if the same medium ID as the received medium ID is registered for that user ID in the user management table TBL1.

### b) Unregistration notification

This notification is data indicating that reproduction of advertisement information during reproduction of the package medium M has not been permitted. This notification is sent if no user IDs stored in the user management table TBL1 are the same as the received user ID, or if no medium IDs registered in the user management TBL1 for the received user ID are the same as the received medium ID.

When this data is received from the control server CS, the media reproduction apparatus MP-k makes a determination of "yes" in step Sb7, and the system control section 106 determines whether or not the received data is the registration notification (step Sb8). If the determination is "no," the system control section 106 sets the reproduction mode to the normal reproduction mode (step Sb19) and terminates the processing.

On the other hand, if the determination is "yes, " the system control section 106 generates image data and outputs it to the decoder 108 (step Sb9), waiting for an input from the user U (step Sb10). This causes the monitor MN to display, for example, a text string such as "Do you agree to inserting advertisements?" and two buttons of "yes" and "no."

According to this display, the user U performs an input operation on the user I/F section 103, for example selecting a button of either "yes" or "no." Then, an input signal corresponding to the input operation is provided from the user I/F section 103, causing the system control section 106 to make a determination of "yes" in step Sb10. The system control section 106 then determines whether or not the input signal corresponds to "yes" in step Sb11.

If the input operation by the user U is the selection of "no, " the system control section 106 makes a determination of "no" in step Sb11. The system control section 106 sets the reproduction mode to the normal reproduction mode (step Sb19) and terminates the processing.

On the other hand, if the input operation by the user U is the selection of "yes," the system control section 106 makes a determination of "yes" in step Sb11. The system control section 106 again generates image data and provides it to the decoder 108 (step Sb12), waiting for an input operation by the user U (step Sb13) . This causes the monitor MN to display, for example, a text string such as "Select the amount of advertisements to be inserted" and three buttons of "LIGHT," "MEDIUM," and "HEAVY."

According to this display, the user U performs an input operation on the user I/F section 103, for example selecting any one of the above buttons. Then, the system control section 106 makes a determination of "yes" in step Sb13 and determines an advertisement insertion amount "Y" based on the selected button (step Sb14). For example, the system control section 106 sets "Y=6" if the user U selects "HEAVY" (step Sb15) or sets "Y=4" for "MEDIUM" (step Sb16) or sets "Y=2" for "LIGHT" (step Sb17). The system control section 106 stores the set value of Y in RAM (not shown), sets the reproduction mode to the advertisement-inserted reproduction mode (step Sb18), and terminates the processing.

Thus, the above processing sets the reproduction mode.

### (1-2) Package medium reproduction processing

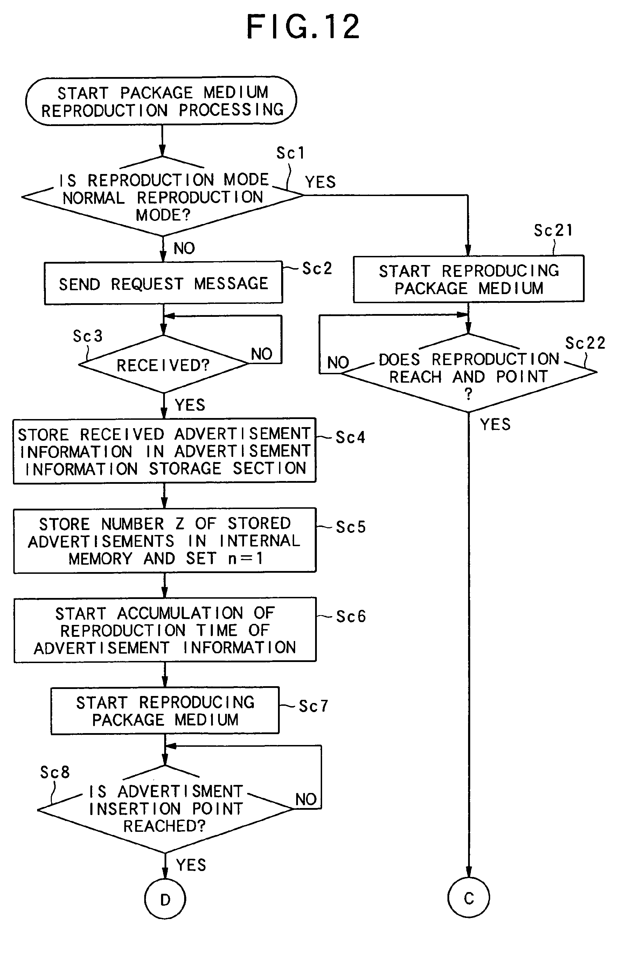

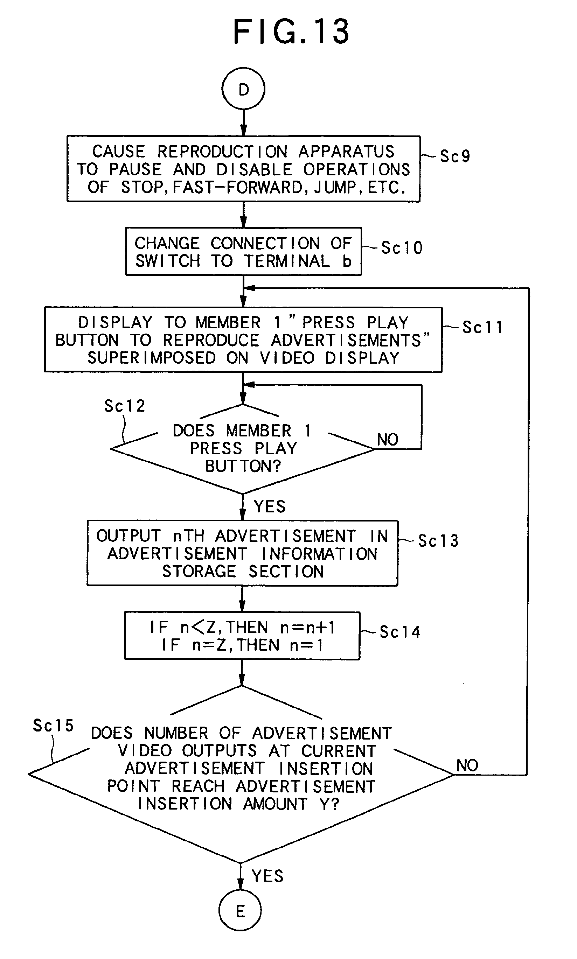

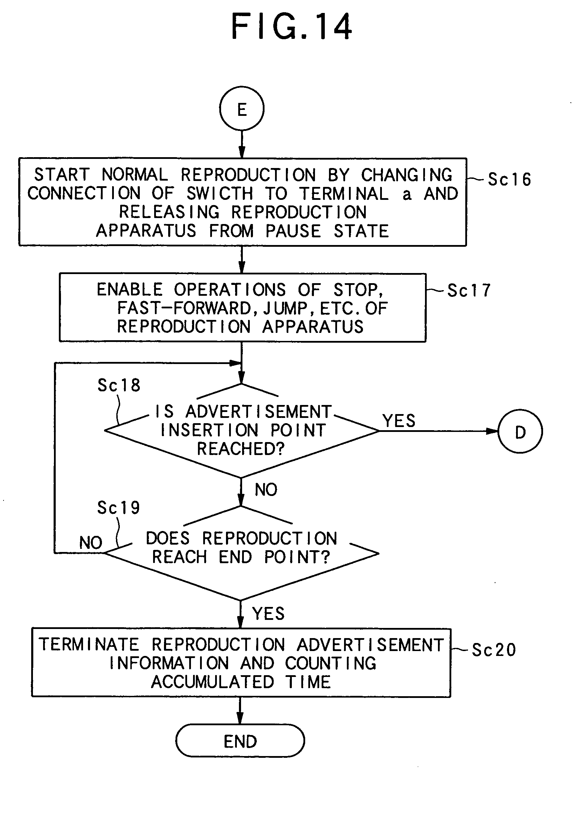

Now, referring to FIGS. 12 through 14, the package medium reproduction processing performed in the above-described step Sa3 will be described. FIGS. 12 through 14 are a flowchart showing details of the package medium reproduction processing performed by the system control section 106 of the media reproduction apparatus MP-k.

Inthis processing, the systemcontrol section 106 first determines whether or not the reproduction mode that was set in the above-described reproduction mode determination processing (step Sa2) is the normal reproduction mode (step Sc1). If the determination indicates that the reproduction mode is set to the normal reproduction mode ("yes") , the system control section 106 outputs a control signal to the switch 107 to change its connection to the terminal a. It also outputs a control signal to the media drive 104 to start reproducing the inserted package mediumM (step Sc21). The system control section 106 then determines whether or not the reproduction of the package medium M has reached the end point (step Sc22) and repeats this processing ("no") until the reproduction of the medium M reaches the end point. Thus, until the reproduction reaches the end point, data read sequentially by the media drive 104 is provided to the decoder 108 via the switch 107, and images corresponding to the content data recorded on the package medium M is displayed on the monitor MN. When the reproduction has reached the end point, the system control section 106 makes a determination of "yes" in step Sc22 and terminates the processing.

On the other hand, if the reproduction mode is set to the advertisement-inserted reproduction mode (step Sc1 "no") , the system control section 106 sends a request message to the control server SC (step Sc2) and waits for data to be received (step Sc3). Here, the system control section 106 attaches to the message a medium ID for the package medium M to be reproduced.

When the request message is received at the control server CS, the advertisement information distribution unit 212 extracts the medium ID included in the request message. It searches the advertisement registration table TBL2 using the medium ID as a search key and reads advertisement IDs stored for that medium ID. It then reads the advertisement information stored for these advertisement IDs from the advertisement information DB 24 and sends it to the media reproduction apparatus MP-k. Thus, the advertisement information to be reproduced during reproduction of the package medium M is selected and distributed to the media reproduction apparatus MP-k.

In this manner, when the advertisement information is received at the media reproduction apparatus MP-k from the control server CS, the system control section 106 makes a determination of "yes" in step Sc3. The system control section 106 stores the received advertisement information in the advertisement information storage section 105 (step Sc4). It also stores the number of the stored advertisements "z" in RAM and sets a counter "n" to "n=1" (stepSc5) . After setting these parameters in this manner, the system control section 106 starts accumulating the reproduction time of the advertisement information (step Sc6). Specifically, it sets a timer for counting the reproduction time of the advertisement information to "0" so that it can count the amount of time for which the advertisement information is reproduced thereafter.

Then, the system control section 106 outputs a control signal to the switch 107 to change its connection to the terminal a. It also outputs a control signal to the media drive 104 to start reproducing the inserted package medium M (step Sc7). Thus, data read sequentially by the media drive 104 is input to the decoder 108 via the switch 107 and is output to the monitor MN. The system control section 106 then determines whether or not the package mediumM being reproduced has reached an advertisement insertion point (step Sc8) and repeats this processing ("no") until an advertisement insertion point is reached.

The reproduction of the package medium M proceeds thereafter, and when an advertisement insertion point has been reached, the system control section 106 makes a determination of "yes" in step Sc8. The system control section 106 outputs a control signal to the media drive 104 to cause the media drive 104 reproducing the package medium M to pause, and further disables operations such as stop and fast-forward (step Sc9). The system control section 106 then outputs a control signal to the switch 107 to change its connection to the terminal b (step Sc10). It also generates image data and outputs it to the decoder 108 (step Se11). This causes the monitor MN to display, for example, a text string such as "Press play button to reproduce advertisements" on the reproduction screen.

In this manner, by forcing the user U to press a play button for reproducing the advertisement information, as well as by disabling functions such as fast-forward, it is possible to prevent the user U from acquiring fraudulent points by reproducing the advertisement information without watching it.

Once the display processing has occurred, the system control section 106 waits for a press of the play button by the user U (step Sc12). When the user U performs the input operation of pressing the play button of the user I/F section 103, the system control section 106 makes a determination of "yes" in step Sc12. The system control section 106 outputs a control signal to the advertisement information storage section 105 to output an "nth" advertisement (step Sc13). As a result, the advertisement information that is output from the advertisement information storage section 105 is input to the decoder 108 via the switch 107, and images corresponding to the advertisement information are displayed on the monitor MN.

Here, "n" has been set to "n=1" at the beginning of the reproduction (step Sc5) . Therefore, if the advertisement information is reproduced for the first time after the reproduction of the package medium M has started, the "first" advertisement will be reproduced out of the advertisements stored in the advertisement information storage section 105.

When the nth advertisement has been reproduced, the system control section 106 sets "n=n+1," or "n=1" if "n=z" (step Sc14). That is, if the value of "n" is below the number "z" of the advertisements stored in the advertisement information storage section 105, "n=n+1" is sequentially set for reproducing a next advertisement; if "n=z" is reached, the "first" advertisement is reproduced again.

The system control section 106 then determines whether or not the number of advertisements inserted at this advertisement insertion point has exceeded the value of "Y" that was set in steps Sb14 through Sb17 in above-described FIG. 11 (step Sc15). If the determination is "no, " the system control section 106 repeats the processing from step Se11 through Sc15. Thus, the advertisement information will be reproduced sequentially until the number of advertisements inserted at this advertisement insertion point exceeds the set value of "Y."

When the number of inserted advertisements has exceeded the value of "Y," the system control section 106 makes a determination of "yes" in step Sc15. The system control section 106 outputs a control signal to the switch 107 to change its connection to the terminal a, and outputs a control signal to the media drive 104 to release it from the pause state (step Sc16). The system control section 106 then enables operations such as stop and fast-forward (step Sc17) and determines whether or not an advertisement point has been reached (step Sc18).

If the determination is "yes," the system control section 106 repeats the processing from step Sc9 through Sc17 to reproduce the advertisement information. On the other hand, if the determination in step Sc18 is "no, " the system control section 106 determines whether or not the reproduction has reached the end point (step Sc19). If this determination is "no," the system control section 106 repeats the processing of step Sc18 and Sc19.

On the other hand, if the determination in step Sc19 is "yes," the system control section 106 outputs a control signal to the media drive to terminate the reproduction of the package medium M and terminates the accumulation of the reproduction time of the advertisement information (step Sc20). Thus, the package medium reproduction processing of step Sa3 terminates.

### (2) Operation on purchasing package medium

Now, operation of the user U on purchasing the package medium M will be described. In the following description, it is assumed that the user U already has the ID card C and has acquired some points.

First, when the user U tries to purchase a package medium using the points recorded on the ID card C, the user U has to decide the package medium M to purchase and pass it to a salesperson of the shop S along with the ID card C. The salesperson of the shop S then enters a total price into the operation unit (not shown) of the shop terminal ST-1 and inserts the received ID card C into the reader/writer (not shown) of the shop terminal ST-1 to perform predetermined operation.

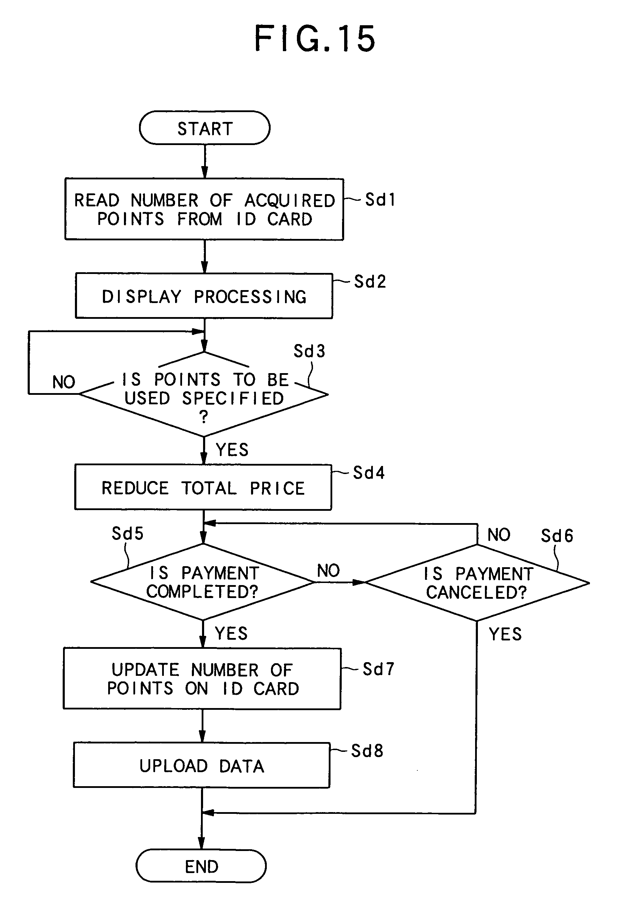

Then, operation shown in FIG. 15 is performed in the shop terminal ST-1. FIG. 15 is a flowchart showing the operation performed in the shop terminal ST-1.

In this processing, the shop terminal ST-1 first reads the total number of acquired points from the ID card C (step Sd1) and performs processing for displaying the number of points on a display unit (not shown) (step Sd2). The shop terminal ST-1 then determines whether or not the number of points to be used has been specified. In this state, the user U or the salesperson of the shop S needs to specify the number of points to be used using the operation unit (not shown) of the shop terminal ST-1.

When an input operation specifying the number of points to be used is performed such as by the user U, the shop terminal ST-1 makes a determination of "yes" in step Sd3 and reduces the total price (step Sd4). Specifically, the shop terminal ST-1 subtracts, from the input total price, the amount corresponding to the number of points to be used.

The shop terminal ST-1 then determines whether or not an input operation for completing the payment has been performed (step Sd5). The shop terminal ST-1 repeats the processing of this step ("no") until the input operation for completing the payment is performed by the salesperson of the shop S. In this state, when the salesperson of the shop S performs the input operation for completing the payment on the operation unit, the shop terminal ST-1 updates the number of points recorded on the ID card C by incrementing the number of used points and decrementing the number of acquiredpoints recorded thereon (step Sd7). After the number of points recorded on the ID card C has been updated in this manner, the shop terminal ST-1 sends data indicating the updated number of points to the control server CS (step Sd8). Here, the shop terminal ST-1 reads the user ID from the ID card C and attaches it to the data.

When the data is received at the control server CS from the shop terminal ST-1, the user management unit 211 searches the user management table TBL1 based on the user ID attached to the received data and updates the number of points for that user ID. As a result, the number of points stored in the user management table TBL1 is reduced, so that the number of points recorded on the ID card C matches that stored in the user management table TBL1.

The user U then pays the reduced price and completes the purchase. The payment may be made in any manner. For example, the payment may be made in cash, or in other manners such as using a credit card or electronic money.

Thus, in this embodiment, the media reproduction apparatus MP-k includes themedia drive 104, the system control section 106, the switch 107, and the decoder 108, which collectively reproduce the package medium M. The media drive 104 acquires a title name as identity information about the package medium M. The media reproduction apparatus further includes the reader/writer 101 for acquiring a medium ID from the ID card C based on the acquired title name, wherein the medium ID indicates whether or not a user has permitted reproduction of advertisement information representing advertisement content during reproduction of the package medium M. The system control section 106 determines the ability to reproduce the advertisement information based on at least the medium ID. The media reproduction apparatus MP-k further includes the network I/F section 102 for acquiring the advertisement information from the control server CS. If the system control section 106 determines that reproduction of the advertisement information has been permitted, the media drive 104 reproduces the advertisement information acquired by the network I/F section 102 while reproducing the package medium M.

According to this configuration, the title name for identifying the package medium M is acquired from the package mediumM, and based on the title name, the medium ID is obtained from the ID card C. Then, based on at least the medium ID, the ability to reproduce the advertisement information is determined, and the advertisement information is acquired from the control server CS. If it is determined that reproduction of the advertisement information has been permitted, the advertisement information is reproduced.

Therefore, since the advertisement information can be reproduced during reproduction of the package medium M, the selling price of the package medium M can be set low. Also, the ability to reproduce the advertisement information is determined based on whether or not the medium ID is recorded on the ID card C without requiring any new information recorded on the medium. Thus, the advertisement information can be inserted and reproduced for conventional media such as DVDs without making modifications to the media.

The media reproduction apparatus MP-k in this embodiment further includes the advertisement information storage section 105 for storing the advertisement information acquired from the control server CS. If the system control section 106 determines that reproduction of the advertisement information has been permitted, the advertisement information stored in the advertisement information storage section 105 is input to the decoder 108 via the switch 107, while data acquired by the media drive 104 reproducing the package medium M is input to the decoder 108 via the switch 107. Thus, according to this configuration, the advertisement information stored in the advertisement information storage section 105 is used for reproduction of the advertisement information. Even if the digital network ISN cannot ensure an enough transmission rate and requires considerable time to download the advertisement information, the advertisement information stored in the advertisement information storage section 105 will be sequentially reproduced. Therefore, the waiting time for the user U during reproduction of the package medium M can be reduced.

Further, the system control section 106 of the media reproduction apparatus MP-k in this embodiment determines the ability to reproduce the advertisement information based on the medium ID and an input operation performed by the user U on the user I/F section 103. According to this configuration, reproduction of the advertisement information is disabled if the user U performs the predetermined input operation during reproduction of the package medium M. Therefore, it is possible to add and reproduce the advertisement information while reflecting the intention of the user U.

Further, in the media reproduction apparatus MP-k in this embodiment, the system control section 106 presets the advertisement insertion amount "Y" that indicates the reproduction time of the advertisement information to be reproduced during reproduction of the package medium M. The advertisement information is reproduced for up to the amount of time specified by the advertisement insertion amount "Y. " According to this configuration, the amount of advertisement information can be increased or decreased according to the intention of the user U when the package mediumM is reproduced.

Further, the media reproduction apparatus MP-k in this embodiment reproduces the advertisement information at predetermined timings during reproduction of the package medium. Therefore, the advertisement insertion points can be set arbitrarily.

Further, the media reproduction apparatus MP-k in this embodiment stops reproducing the package medium M when the advertisement insertion point is reached. Then, only if the user U provides a predetermined input to the user I/F section 103, the advertisement information is reproduced. According to this configuration, since the advertisement information will not be reproduced unless the user U performs the operation, the user U can be prevented from acquiring fraudulent points by intentionally reproducing the advertisement information that the user U will not watch.

Further, the system control section 106 of the media reproduction apparatus MP-k in this embodiment computes the points corresponding to monetary value when the advertisement information has been reproduced and records the points on the ID card C. The recorded points are sent to the control server CS by the network I/F section 102. The advertisement information distribution system 1 in this embodiment further includes the shop terminal ST-1. When the shop terminal ST-1 is used to make payment, the total price is reduced based on the points recorded on the ID card C. The number of points corresponding to the amount used by the user U is subtracted from the number of points recorded on the ID card C, and the new number of points is recorded on the ID card C.

According to this configuration, when the user U purchases a package medium M using the points, the number of points recorded on the ID card C is read by the shop terminal ST-1. Then, the total price is reduced based on the points, and the number of points recorded on the ID card C is updated. Therefore, the user U can obtain a discount according to the acquired points when purchasing the package medium M.

In this embodiment, information about the points acquired by the user U and the package medium M purchased by the user U is recorded and updated on the ID card C. However, this information may be recorded in an information terminal device, for example, a mobile phone or a PDA (Personal Digital Assistant). In that case, the device such as a mobile phone, the media reproduction apparatus MP-k, and the shop terminal ST-1 may be equipped with a communication interface such as of IrDA (InfraRed Data Association) or Bluetooth, which may be used to communicate or update the data.

Thepointsmaybemanagedevenwithoutphysicalhardware. The control server CS may manage the points by storing a password in its user registration table TBL1 and requiring input of the user ID and the password for reproduction of the package medium M.

Further, the media reproduction apparatus MP-k in this embodiment grants the points to the user U irrespective of the reproduction time of the content data recorded on the package medium M. However, with this configuration, the user U might acquire fraudulent points by intentionally repeating the advertisement insertion point to reproduce the advertisement information unlimitedly. Therefore, an allowable reproduction time for the advertisement information may be preset relative to the reproduction time of the main content data to prevent such a fraud. Withthis configuration, the system control section 106 of the media reproduction apparatus MP-k needs to compute the allowable reproduction time for the advertisement information from the reproduction time of the content before the package medium M is reproduced. Then,thisconfiguration may be implemented as follows. After step Sc17 in the processing of above-described FIGS. 12 through 14, it is determined whether or not the allowable reproduction time has been exceeded. If it has been exceeded, the process skips step Sc18 and jumps to step Sc19. This processing is repeated if the determination in step Sc19 is "no."

Further, the advertisement registration table TBL2 of the control server CS in this embodiment stores in advance, for each medium ID, advertisement IDs corresponding to the advertisement information to be distributed. However, the advertisement information to be distributed on reproduction of each package medium M may be made changeable by allowing the content of the advertisement registration table TBL2 (i. e. , advertisement IDs for each medium ID) to be arbitrarily changeable. With this configuration, the advertisement information to be distributed can be changed immediately when the advertisements become out of date, so that real-time advertisements can be maintained.

Further, while the media reproduction apparatus MP-k reproduces the package medium in this embodiment, similar advertisement information distribution may also be implemented in network distribution or server-based broadcasting.

Further, if the package medium M has a recording area for other types of data in addition to a recording area for the content data, several types of information recorded on the ID card C in this embodiment may be recorded on the package medium M in that recording area for the other types of data.

Further, if the ID card C is used on which various types of advertisement information can be recorded, the advertisement information may be downloaded from the control server CS using the shop terminal ST-1 and prerecorded on the ID card C at the time of purchase of the package medium M. In that case, when the media reproduction apparatus MP-k reproduces the package medium M, it will reproduce the advertisement information read from the ID card C. With this configuration, the advertisement information can be smoothly reproduced irrespective of the transmission rate between the media reproduction apparatus MP-k and the control server CS.

Further, while the control server CS and the shop terminal ST-1 in this embodiment communicates via the public digital network ISN, they may be connected via a dedicated line LL, via which they communicate with each other.

Further, the advertisement information in this embodiment is downloaded by the media reproduction apparatus MP-k from the control server CS before the package medium M is reproduced. However, the advertisement information may be downloaded in real-time as the package medium M is reproduced.

Further, the media reproduction apparatus MP-k in this embodiment stops reproducing the content data at the advertisement insertion points during reproduction of the package medium M and starts reproducing the advertisement information. However, the advertisement information may be superimposed on the reproduction screen of the content data recorded on the package medium M in order to provide what is called a pop-up display. In that case, the switch 107 shown in FIG. 4 may be eliminated, and a decoder for decoding data from the advertisement information storage section 105 and a decoder for decoding data from the media drive 104 may be provided so that an adder adds output signals from both decoders.

Further, in this embodiment, the media reproduction apparatus MP-k reproduces the advertisement information based on the information read from the ID card C. However, there may be a recording medium that contains a program defining the operation of the above processing and a computer for reading the program, wherein the computer reads the program to perform processing operation similar to that described above.

### [2] Variations of embodiment

### [2.1] Variation 1

In the above-described embodiment, all media reproduction apparatuses MP-k are included in a single network, that is, the public digital network ISN. However, in some environments of the users U, each media reproduction apparatus MP-k is included in a different network. In this regard, the control server CS may distribute the advertisement information with varying advertisement information image rates depending on the transmission rate of the network that includes each media reproduction apparatus MP-k. This provides advertisement information distribution adapted to the network environment of each user U.

To implement this function, the control server CS according to this variation further includes a data amount reduction device in addition to the components shown in above-described FIG. 5. Under the control of the advertisement information distribution unit 212, the data amount reduction device reduces the amount of various types of image data before distributing it to the media reproduction apparatus MP-k. The data amount reduction device may reduce the data amount of the advertisement information in anymanner, including the following techniques for example.

### a) Reduction technique 1

In this technique, the data amount reduction device reduces the data amount of the advertisement information by decoding the advertisement information read from the advertisement information DB 24 and re-encoding it with a greater quantization step.

### b) Reduction technique 2

In this technique, the data amount reduction device reduces the data amount of the advertisement information by eliminating frames that are less likely to affect decoding, for example B frames, at certain intervals in a plurality of frames constituting the advertisement information read from the advertisement information DB 24. As a result, for example, the advertisement information made up of images of 30 frames per second is compressed to data made up of images of 10 frames per second, which include only I and P frames.

### c) Reduction technique 3

In this technique, the data amount reduction device reduces the data amount of the advertisement information by decoding the advertisement information read from the advertisement information DB 24 and re-encoding it with a higher compression rate than its original compression rate.

In the case where the transmission rate varies for each network that includes the media reproduction apparatuses MP-k, the amount of data reduction cannot be determined unless the control server CS can know the transmission rate of the network. Therefore, in this variation, the system control section 106 of the media reproduction apparatus MP-k computes and records the transmission rate of the network that includes the media reproduction apparatus by performing transmission rate computation processing at power-on, which will be described below. When the request message is sent in step Sc12 of above-described FIG. 12, the recorded transmission rate is attached to the message.

The advertisement information distribution unit 212 of the control server CS in turn performs data amount reduction processing according to the transmission rate attached to themessage, as will be described below. After this processing, advertisement information of reduced data amount is distributed to the media reproduction apparatus MP-k.

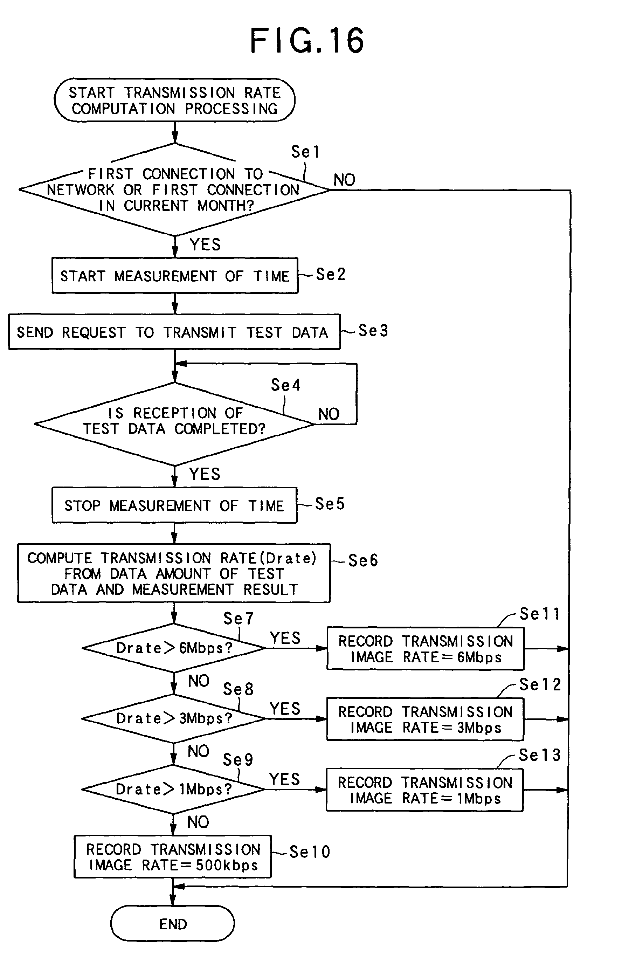

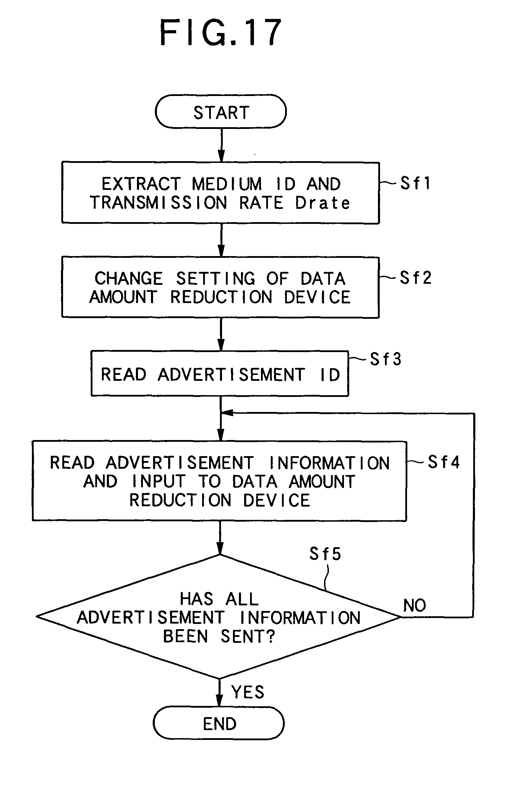

Now, referring to FIGS. 16 and 17, specific processing will be described. FIG. 16 is a flowchart showing details of the above-mentioned transmission rate computation processing, and FIG. 17 is a flowchart showing details of the above-mentioned data amount reduction processing.

First, triggered by power-on of the media reproduction apparatus MP-k, the system control section 106 starts the transmission rate computation processing. The system control section 106 determines whether or not the media reproduction apparatus MP-k is connected to the network for the first time or whether or not this is the first power-on in that month (step Se1). If the determination is "no, " the system control section 106 considers that the transmission rate has been already computed and terminates the processing.

On the other hand, if the determination is "yes" in step Se1, the system control section 106 starts measurement of time (step Se2) and sends a request to transmit test data from the control server CS (step Se3). In response to the request, the user management unit 211 of the control server CS sends test data. The test data is data of a predetermined data amount (for example, 500 KByte) stored in advance in the control server CS for measurement of the transmission rate.

After sending the request, the system control section 106 of the media reproduction apparatus MP-k determines whether or not reception of the test data is completed (step Se4) and repeats this processing ("no") until the reception is completed. When the test data is received, the system control section 106 stops the measurement of time (step Se5) . Thus, the time that it took the system control section 106 to send the request and receive the test data is measured. Since the data amount of the request is negligible compared to that of the test data, the time from the transmission of the request to the start of reception of the test data has little influence to the measurement result.

The system control section 106 then computes a transmission rate Drate of the network that includes the media reproduction apparatus MP-k (step Se6) based on the data amount of the test data and the measurement result obtained in step Se5. The system control section 106 determines whether or not the computed transmission rate Drate is "6 Mbps" or above (step Se7). If the determination is "yes, the transmission rate of the network is recorded as "6 Mbps" (step Se11) and the processing terminates.

On the other hand, if the determination is "no, " then the system control section 106 determines whether or not the computation result is "3 Mbps" or above (step Se8). If the determination is "yes," the Drate is recorded as "3 Mbps" (step Se12) and the processing terminates. If the determination is "no" in step Se8, the system control section 106 determines whether or not the computation result is "1 Mbps" or above. If the determination is "yes," the Drate is recorded as "1 Mbps" (step Se13). If the determination is "no," the Drate is recorded as "500 kbps" (step Se10). Then the processing terminates.

As a result of the above sequential processing, the transmission rate Drate of the network that includes the media reproduction apparatus MP-k is computed and recorded. After the transmission rate Drate has been computed and recorded, the user U sets in the media drive 104 the package medium M to be reproduced, and sets the ID card C in the reader/writer 101. The user U then performs an input operation for reproducing the package medium M on the user I/F section 103 of the media reproduction apparatus MP-k. In response to the input operation, the system control section 106 of the media reproduction apparatus MP-k performs the reproduction mode determination processing shown in above-described FIGS. 10 and 11 and then performs the package medium reproduction processing shown in FIGS. 12 through 14. Details of the reproduction mode determination processing and the package medium reproduction processing are basically similar to those in the above-described embodiment.

The only difference in this processing from the above-described embodiment is step Sc2 of FIG. 12. Specifically, when sending the request message in step Sc2, the system control section 106 attaches to the request message not only the medium ID for the package mediumM to be reproduced, but also the recorded transmission rate Drate.

When the request message is received at the control server CS, the advertisement information distribution unit 212 performs the data amount reduction processing shown in FIG. 17. In this processing, the advertisement information distribution unit 212 first extracts the medium ID and the Drate attached to the request message (step Sf1). The advertisement information distribution unit 212 then outputs a control signal corresponding to the extracted Drate to the data amount reduction device, thereby changing the setting of the data amount reduction device (step Sf2).

The advertisement information distribution unit 212 then searches the advertisement registration table TBL2 using the medium ID extracted in Step Sf1 as a search key, and reads the advertisement IDs stored for that medium ID (step Sf3). For the advertisement IDs read in this manner, the advertisement information distribution unit 212 reads corresponding advertisement information from the advertisement information DB 24 and inputs the advertisement information sequentially to the data amount reduction device (step Sf4). As a result, the data amount of the advertisement information is reduced to the data amount appropriate for the Drate by the data amount reduction device, and the reduced advertisement information is distributed to the media reproduction apparatus MP-k.

The advertisement information distribution unit 212 then determines whether or not all advertisements have been distributed (step Sf5) and repeats (step Sf5 "no") the processing of step Sf4 and Sf5 until all advertisements are distributed.

In the meantime, in the media reproduction apparatus MP-k, the processing of steps Sc3 through Sc21 of above-described FIGS. 12 through 14 is performed. As a result, the advertisement information is inserted and reproduced during reproduction of the package medium M.

Thus, the control server CS in this variation further includes the data amount reduction device, which, depending on the transmission rate of the network that includes the media reproduction apparatus MP-k, changes the data amount of the advertisement information to be distributed to the media reproduction apparatus MP-k. The control server CS reduces the data amount of the advertisement information by means of the data amount reduction device and distributes the reduced advertisement information to the media reproduction apparatus MP-k. According to this configuration, the advertisement information is distributed to the media reproduction apparatus MP-k after its data amount is reduced according to the transmission rate of the network that includes the media reproduction apparatus MP-k. Therefore, it is possible to distribute the advertisement information of reduced data amount according to the transmission rate of the network and thereby to reduce the waiting time for the user U.

### [2.2] Variation 2

In the above-described embodiment, the media reproduction apparatus MP-k determines the reproduction mode when reproducing the package medium M and reproduces the package medium M in that mode. However, the user U may desire to reproduce the advertisement information after starting reproducing the package mediumM in the above-described normal reproduction mode. Also, the user U may desire to switch to the normal reproduction mode after starting reproducing the package medium M in the advertisement-inserted reproduction mode.

Therefore, this variation is intended to make it possible to switch the reproduction mode after the media reproduction apparatus MP-k starts reproducing the package medium M. To implement this function, the system control section 106 of the media reproduction apparatus MP-k according to this variation displays a menu screen superimposed on the reproduction screen in response to a predetermined input operation performed on the user I/F section 103. The menu screen prompts the user U to select the reproduction mode.

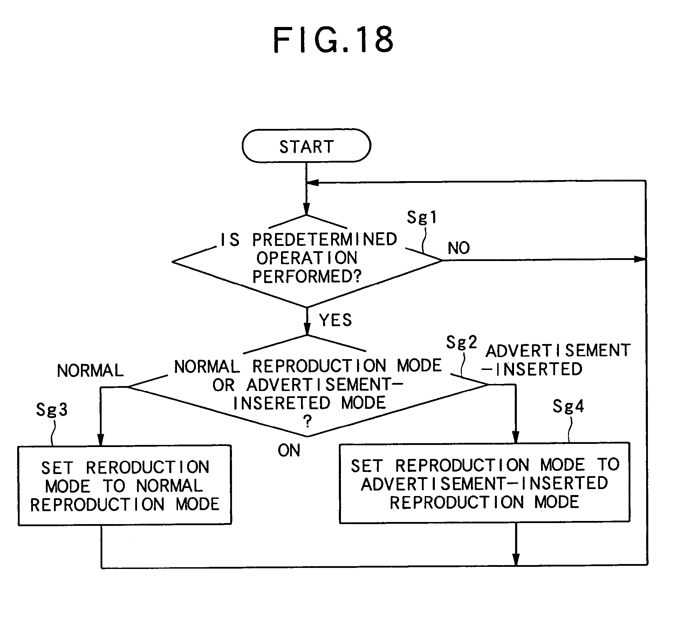

Referring to FIG. 18, details of this processing will be described. FIG. 18 is a flowchart showing processing performed by the system control section 106 of the media reproduction apparatus MP-k when the menu screen is on the display.

Inthisprocessing, the system control section 106 first determines whether or not a predetermined operation has been performed on the menu screen display through the user I/F section 103 (step Sg1) and repeats the processing of this step ("no") until the operation is performed. The system control section 106 then determines whether the operation performed in step Sg1 is an operation for selecting the normal reproduction mode or an operation for selecting the advertisement-inserted reproduction mode (step Sg2).

If it is determined that the operation is for selecting the normal reproduction mode, the system control section 106 switches the reproduction mode to the normal reproduction mode (step Sg3). If the reproduction has already been in the normal reproduction mode, the current reproduction state is maintained without any change thereto. On the other hand, if the reproduction has already been in the advertisement-inserted reproduction mode, the system control section 106 computes the points to be granted to the user U based on the reproduction time or other factors of the reproduced advertisement information and records the points on the ID card C. The system control section 106 then uploads data such as the points to the control server CS while continuing reproducing the package medium M.

If it is determined that the operation is for selecting the advertisement-inserted reproduction mode in step Sg2, the system control section 106 switches the reproduction mode to the advertisement-inserted reproduction mode. If the reproduction of the package medium M has already been in the advertisement-inserted reproductionmode, the system control section 106 continues the processing of FIGS. 12 through 14. On the other hand, if the reproduction has already been in the normal reproduction mode, the system control section 106 invokes the processing of steps Sc2 through Sc6 of FIG. 12 to download the advertisement information from the control server CS and store it in the advertisement information storage section 105. The system control section 106 then invokes the processing of steps Sc8 through Sc21 of above-described FIGS. 12 through 14. As a result, the advertisement information stored in the advertisement information storage section 105 will be reproduced at the advertisement insertion points. Since the processing performed here is similar to that of above-described FIGS. 12 through 14, it will not be described in detail here.

Thus, in the media reproduction apparatus MP-k of this variation, when the advertisement information is being provided to the decoder 108 via the switch 107, a predetermined input to the I/F section 103 provided by the user will cause the system control section 106 to stop reproducing the advertisement information. That is, if the user U performs the predetermined input operation, reproduction of the advertisement information is stopped in the media reproduction apparatus MP-k. Therefore, the user U can stop reproducing the advertisement information on the fly according to the user's intention, thereby enhancing the convenience for the user U.

### [2.3] Variation 3

In the advertisement information distribution system 1 according to the above-described embodiment, the ID card C has recorded thereon a medium ID corresponding to the package medium M for which the user U has permitted reproduction of advertisement information. When the package medium M is reproduced, ability to reproduce advertisement information is determined based on information such as a title name recorded on the package medium M and the medium ID recorded on the ID card C.

However, the information recorded on the ID card C may be alternatively stored in the control server CS or other ASP (Application Service Provider) servers so that a virtual card employing network-based electronic authentication may be provided. In that case, a physical module like the ID card C is not issued to the user U, but a user ID corresponding to the user U and a password of the user U are issued instead.

When the user U reproduces a newly purchased package medium M for the first time with the media reproduction apparatus MP-k, the user U enters the user ID and password issued to the user U into the user I/F section 103 of the media reproduction apparatus MP-k instead of inserting the ID card C into the media reproduction apparatus MP-k. The system control section 106 then sends data such as the entered password to the control server CS.

When the data is received at the control server CS, the user management unit 211 authenticates the user based on the received data. If the authentication succeeds, previously registered information is returned to the media reproduction apparatus MP-k, that is, the same information as that recorded on the ID card C in the above embodiment is returned. Thus, the returned information is stored in memory (not shown) of the media reproduction apparatus MP-k.

When the package medium M is reproduced, it is determined, based on the information stored in the media reproduction apparatus MP-k, whether or not insertion and reproduction of advertisement information has been permitted during reproduction of the package medium M that is going to be reproduced. Only if it is determined that it has been permitted, the reproduction mode is set to the advertisement-inserted mode. Other operations are similar to those in the above-described embodiment and will not be described here.

It should be understood that various alternatives to the embodiment of the invention described herein may be employed in practicing the invention. Thus, it is intended that the following claims define the scope of the invention and that methods and structures within the scope of these claims and their equivalents be covered thereby.

## Claims

1. A content data reproducing apparatus (MP-k), **characterized in that** the content data reproducing apparatus comprises:
a reproducing device (108) which reproduces content data recorded on a first recording medium;
an identity information acquisition device (104) which acquires medium identity information as identity information about the first recording medium;
a reproduction permission information acquisition device (101) which acquires reproduction permission information from either one of a second recording medium different from the first recording medium or an external apparatus based on the acquired medium identity information, the reproduction permission information indicating whether or not a user permits reproduction of advertisement information representing advertisement content during reproduction of the content data;
a determination device (106) which determines an ability to reproduce the advertisement information based on at least the reproduction permission information; and
an advertisement information acquisition device (102) which externally acquires the advertisement information;
wherein if the determination device (106) determines that reproduction of the advertisement information is permitted, the reproduction device (108) reproduces the acquired advertisement information while reproducing the content data.

2. The content data reproducing apparatus according to claim 1, **characterized in that** the content data reproducing apparatus further comprises an advertisement information storage device (105) which stores the advertisement information acquired by the advertisement information acquisition device (102),
wherein if the determination device determines that reproduction of the advertisement information is permitted, the reproducing device reproduces the advertisement information stored in the advertisement information storage device while reproducing the content data.

3. The content data reproducing apparatus according to claim 1, wherein if the determination device determines that reproduction of the advertisement information is permitted, the reproduction device sequentially reproduces the acquired advertisement information as the advertisement information acquisition device acquires the advertisement information.

4. The content data reproducing apparatus according to claim 1, wherein the determination device determines the ability to reproduce the advertisement information based on the reproduction permission information and operation information indicating an input operation provided by the user to the content data reproducing apparatus.

5. The content data reproducing apparatus according to claim 1, **characterized in that** the content data reproducing apparatus further comprises an insertion time information setting device (106) which presets insertion time information indicating a reproduction time for the advertisement information that the reproducing device should reproduce during reproduction of the content data,
wherein the reproducing device reproduces the advertisement information for up to the reproduction time indicated by the insertion time information while reproducing the content data.

6. The content data reproducing apparatus according to claim 1, wherein the reproducing device stops reproducing the advertisement information if the user provides a predetermined input to the content data reproducing apparatus during reproduction of the advertisement information.

7. The content data reproducing apparatus according to claim 1, wherein the reproducing device reproduces the advertisement information at a predetermined timing during reproduction of the content data.

8. The content data reproducing apparatus according to claim 7, wherein the reproducing device stops reproducing the content data when the predetermined timing is reached, and then the reproduction device reproduces the advertisement information if the user provides a predetermined input to the content data reproducing apparatus.

9. The content data reproducing apparatus according to claim 1, **characterized in that** the content data reproducing apparatus further comprises:
a writing device (101) which writes monetary data corresponding to monetary value onto either one of the second recording medium or the external apparatus when the reproducing device reproduces the advertisement information; and
a transmission device (102) which transmits the monetary data written by the writing device to a network.

10. An advertisement information distribution system (1), **characterized in that** the advertisement information distribution system comprises:
an advertisement information distribution server (CS) including an advertisement information distribution device (212) which distributes advertisement information representing advertisement content to a content data reproducing apparatus which reproduces content data recorded on a first recording medium;
a reproducing device (108) which reproduces the content data;
an identity information acquisition device (104) which acquires medium identity information as identity information about the first recording medium;
a reproduction permission information acquisition device (101) which acquires reproduction permission information from either one of a second recording medium (C) different from the first recording medium or an external apparatus based on the acquired medium identity information, the reproduction permission information indicating whether or not a user permits reproduction of the advertisement information during reproduction of the content data;
a determination device (106) which determines an ability to reproduce the advertisement information based on at least the reproduction permission information; and
an advertisement information acquisition device (102) which externally acquires the advertisement information; and
wherein if the determination device determines that reproduction of the advertisement information is permitted, the reproducing device reproduces the acquired advertisement information while reproducing the content data.

11. The advertisement information distribution system according to claim 10, **characterized in that** the advertisement information distribution system further comprises a network that includes the content data reproducing apparatus (MP-k) ,
wherein the advertisement information distribution server further includes a data amount changing device (211) for changing a data amount of the advertisement information to be transmitted to the content data reproducing apparatus depending on a transmission rate of the network, and
wherein the advertisement information distribution device of the advertisement information distribution server distributes the advertisement information to the content data reproducing apparatus with the data amount changed by the data amount changing device.

12. The advertisement information distribution system according to claim 10, wherein the content data reproducing apparatus further includes:
a writing device (101) which writes monetary data corresponding to monetary value onto either one of the second recording medium or the external apparatus when the reproducing device reproduces the advertisement information; and
a transmission device (102) which transmits the monetary data written by the writing device to the advertisement information distribution server.

13. The advertisement information distribution system according to claim 12, **characterized in that** the advertisement information distribution system further comprises an accounting apparatus (ST-1) including:
an accounting device which settles an account when the user of the content data reproducing apparatus purchases the recording medium;
a subtracting device which reduces a total price based on the monetary data recorded on the external apparatus; and
amonetarydatawritingdevicewhichwritesthemonetary data in the external apparatus with the monetary data recorded in the external apparatus minus an amount corresponding to an amount of money used by the user.

14. An advertisement information distribution method, **characterized in that** the advertisement information distribution method comprises:
a first step of acquiring medium identity information as identity information about the first recording medium by a content data reproducing apparatus which reproduces content data recorded on a first recording medium;
a second step of acquiring reproduction permission information from either one of a second recording medium different from the first recording medium or an external apparatus based on the acquired medium identity information, the reproduction permission information indicating whether or not a user permits reproduction of advertisement information representing advertisement content during reproduction of the content data;
a third step of determining an ability to reproduce the advertisement information based on at least the reproduction permission information;
a fourth step of externally acquiring the advertisement information; and
a fifth step of, if it is determined that reproduction of the advertisement information is permitted in the third step, reproducing the acquired advertisement information while reproducing the content data.

15. An information recording medium in which an content data reproducing program to reproduce content data recorded on a first medium is recorded in a readable way by a computer included in a content data reproducing apparatus,
**characterized in that** the program causing the computer to function as:
an identity information acquisition device which acquires medium identity information as identity information about the first recording medium;
a reproduction permission information acquisition device which acquires reproduction permission information from either one of a second recording medium different from the first recording medium or an external apparatus based on the acquired medium identity information, the reproduction permission information indicating whether or not a user permits reproduction of advertisement information representing advertisement content during reproduction of the content data;
a determination device which determines an ability to reproduce the advertisement information based on at least the reproduction permission information;
an advertisement information acquisition device which externally acquires the advertisement information; and
a reproducing device which reproduces content data,
wherein if the determination device determines that reproduction of the advertisement information is permitted, the reproducing device reproduces the acquired advertisement information while reproducing the content data.
